# EUROPEAN PATENT APPLICATION

(11) **EP 4 391 635 A1**
(43) Date of publication of application: **26.06.2024**
(21) Application number: 22863530.6
(22) Date of filing: 31.08.2022
(51) Int. Cl.: H04W 24/10, H04L 25/02, H04W 4/38, H04W 24/02

(54) **COMMUNICATION METHOD AND APPARATUS**

(30) Priority: 01.09.2021 CN 202111021052
(71) Applicant: Huawei Technologies Co., Ltd., Shenzhen, Guangdong 518129 (CN)
(72) Inventor: XU, Shengfeng, Shenzhen, Guangdong 518129 (CN); YING, Jiangwei, Shenzhen, Guangdong 518129 (CN); YANG, Yanmei, Shenzhen, Guangdong 518129 (CN)
(74) Representative: Maiwald GmbH
(86) International application number: PCT/CN2022/116264
(87) International publication number: WO 2023/030395

(57) **Abstract**

This application provides a communication method and apparatus, so that sensing can be performed in a cooperative sensing mode, to improve sensing accuracy. The method and the apparatus may be applied to a 4G system, a 5G system, and a future communication system, for example, a 6G system. The method includes: determining that a first sensing service uses cooperative sensing, and sending a first request message to a second sensing network element. The first request message is used to request the second sensing network element to perform sensing, the first request message includes first sensing mode information, and the first sensing mode information indicates the cooperative sensing.

## Description

This application claims priority to Chinese Patent Application No. 202111021052.3, filed with the China National Intellectual Property Administration on September 1, 2021, and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

With development of science and technology, a wireless sensing technology has appeared in people's daily life and is widely used. For example, a sensing function (sensing function, SF) network element controls, based on a request of a sensing requester, an access network device to perform a sensing operation. Specifically, the access network device sends a sensing signal, receives a reflected echo signal, obtains sensing data based on the echo signal, and sends the sensing data to the SF network element. The echo signal is a signal formed after the sensing signal reaches a sensing target and is reflected by a surface of the sensing target because the sensing target cannot completely absorb an electromagnetic wave. The SF network element provides a sensing service for the sensing requester based on the sensing data.

In the sensing solution, the access network device receives the echo signal in a single direction, and sensing accuracy is low.

### SUMMARY

Embodiments of this application provide a communication method and apparatus, so that sensing can be performed in a cooperative sensing mode, and sensing accuracy can be improved.

To achieve the foregoing objective, the following technical solutions are used in this application.

According to a first aspect, a communication method is provided. The communication method includes: determining that a first sensing service uses cooperative sensing, and sending a first request message to a second sensing network element. The first request message is used to request the second sensing network element to perform sensing, the first request message includes first sensing mode information, and the first sensing mode information indicates the cooperative sensing.

It should be noted that the communication method provided in the first aspect may be used in combination with the communication methods provided in the second aspect and the third aspect, or the communication method provided in the first aspect may be used in combination with the communication methods provided in the fourth aspect and the fifth aspect.

In a possible design manner, the communication method provided in the first aspect may further include: sending a second request message to at least one third sensing network element. The second request message may be used to request the at least one third sensing network element to perform sensing, the second request message may include second sensing mode information, and the second sensing mode information may indicate the cooperative sensing.

In this case, a first sensing network element determines that the first sensing service uses the cooperative sensing, and sends, to each of the second sensing network element and the at least one third sensing network element, a request message for requesting sensing. The request message includes sensing mode information indicating the cooperative sensing. The second sensing network element performs the sensing based on the indicated cooperative sensing, and the at least one third sensing network element performs the sensing based on the indicated cooperative sensing, so that sensing can be performed in the cooperative sensing mode, to improve sensing accuracy. In a possible design manner, the first sensing mode information may include first operation mode information, and the first operation mode information may indicate an operation mode of the second sensing network element. In this case, the second sensing network element may perform the sensing based on the operation mode indicated by the first operation mode information.

Optionally, the first operation mode information may include sending a sensing signal and receiving an echo signal, sending the sensing signal and not receiving the echo signal, or receiving the echo signal and not sending the sensing signal. Optionally, a sensing signal and receiving an echo signal may include: sending the sensing signal and receiving the echo signal corresponding to the sent sensing signal, or sending the sensing signal and receiving the echo signal corresponding to the sent sensing signal and an echo signal corresponding to a sensing signal sent by another sensing network element.

In a possible design manner, the second sensing mode information may include second operation mode information, the second operation mode information may indicate an operation mode of the third sensing network element, and the operation mode of the second sensing network element and the operation mode of the at least one third sensing network element are used to implement the cooperative sensing. In this case, the second sensing network element may perform the sensing based on the first operation mode information, and the third sensing network element may perform the sensing based on the second operation mode information, to implement the cooperative sensing.

In a possible design manner, a mode of the cooperative sensing may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the communication method provided in the first aspect may further include: determining the first operation mode information based on the cooperative sensing mode. Optionally, at least one piece of second operation mode information may be further determined.

Optionally, assuming that the second sensing network element is a primary sensing network element, the second operation mode information may be determined by the second sensing network element based on the cooperative sensing mode, or determined by the second sensing network element based on the cooperative sensing mode and the first operation mode information. In other words, the second operation mode information may be determined by the second sensing network element.

In a possible design manner, the determining the first operation mode information and at least one piece of second operation mode information based on the cooperative sensing mode may include: determining the first operation mode information based on the cooperative sensing mode and at least one of first capability information and first sensing resource information. Optionally, the at least one piece of second operation mode information may be further determined. The first capability information may include sensing capability information of the second sensing network element and sensing capability information of the at least one third sensing network element, the first sensing resource information may include sensing resource information of the second sensing network element and sensing resource information of the at least one third sensing network element, and the sensing resource information may indicate a resource for sending a sensing signal. In this case, the operation mode of the second sensing network element can be more accurately determined, and power consumption can be reduced. For example, a power consumption waste caused because a capability of the sensing network element does not support the operation mode or the resource does not support sending the sensing signal can be avoided.

Optionally, the sensing capability information may include but is not limited to one or more of the following: supporting sending the sensing signal and receiving the echo signal, supporting sending the sensing signal but not supporting receiving the echo signal, supporting receiving the echo signal but not supporting sending the sensing signal, a primary sensing network element capability, and a scheduling capability of the cooperative sensing.

In a possible design manner, the first operation mode information may include sending the sensing signal and receiving the echo signal, sending the sensing signal and not receiving the echo signal, or receiving the echo signal and not sending the sensing signal. In this case, the second sensing network element may implement the cooperative sensing based on the operation mode indicated by the first operation mode information.

In a possible design manner, the second operation mode information may include sending the sensing signal and receiving the echo signal, sending the sensing signal and not receiving the echo signal, or receiving the echo signal and not sending the sensing signal. In this case, the third sensing network element may implement the cooperative sensing based on the operation mode indicated by the first operation mode information.

Optionally, the sending the sensing signal and receiving the echo signal may include: sending the sensing signal and receiving the echo signal corresponding to the sent sensing signal, or sending the sensing signal and receiving the echo signal corresponding to the sent sensing signal and an echo signal corresponding to a sensing signal sent by another sensing network element.

In a possible design manner, the sending a first request message to a second sensing network element may include: sending the first request message to the second sensing network element based on the sensing capability information of the second sensing network element. Optionally, the first sensing network element may determine the second sensing network element as the primary sensing network element based on that the second sensing network element has the primary sensing network element capability and/or the cooperative sensing scheduling capability, and send the first request message to the primary sensing network element.

In a possible design manner, the determining that a first sensing service uses cooperative sensing may include: determining, based on one or more of sensing service information, first indication information, sensing result information, the first capability information, and the first sensing resource information, that the first sensing service uses the cooperative sensing. The sensing service information may include a service type of the first sensing service and/or a service requirement of the first sensing service, the first indication information indicates a sensing mode expected by a first network element, the sensing result information may include whether sensing data obtained in a single-station sensing mode meets the service requirement, the first capability information may include the sensing capability information of the second sensing network element and the sensing capability information of the at least one third sensing network element, the first sensing resource information may include the sensing resource information of the second sensing network element and the sensing resource information of the at least one third sensing network element, and the sensing resource information indicates the resource that can be used to send the sensing signal. In this way, usage of the cooperative sensing or a specific mode of the cooperative sensing may be determined.

Optionally, the cooperative sensing may refer to cooperative sensing or single-station sensing, or the cooperative sensing may refer to a specific mode of the cooperative sensing, for example, a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the sensing service information may further include one or more of the following: a correspondence between the service type of the first sensing service and the cooperative sensing, and a correspondence between the service requirement of the first sensing service and the cooperative sensing. Optionally, the correspondence between the service type of the first sensing service and the cooperative sensing may be a correspondence between the service type of the first sensing service and the cooperative sensing mode. For example, the service type of the first sensing service corresponds to the single base station acting as a transmitter and a receiver, the different base stations acting as a transmitter and a receiver, the one base station acting as a transmitter and multiple base stations acting as receivers, or the multiple base stations acting as transmitters and one base station acting as a receiver.

In a possible design manner, the first request message may further include data indication information and/or address information. The data indication information may indicate that sensing data carries a time stamp or a sequence number, and the address information may indicate an address for sending the sensing data. In this case, after obtaining the sensing data, the second sensing network element includes the time stamp or the sequence number in the sent sensing data, so that the first sensing network element performs fusion processing on the sensing data.

For the second sensing network element, the address information indicates an address of the first sensing network element, or an address of a sensing network element cooperating with the second sensing network element, for example, an address of the third sensing network element. In this case, the second sensing network element may send the sensing data to the address of the first sensing network element, or may send the sensing data to the address of the third sensing network element, and the third sensing network element sends the sensing data to the first sensing network element.

In a possible design manner, the first request message may further include identification information of the at least one third sensing network element and/or first primary-secondary indication information. The first primary-secondary indication information may indicate that the second sensing network element is a primary sensing network element or a secondary sensing network element. In this case, the second sensing network element may cooperate with the at least one third sensing network element by using the identification information of the at least one third sensing network element.

In a possible design manner, the first request message may further include sensing time information and/or sensing bandwidth information. The sensing time information may include one or more of the following: sensing duration, a sensing periodicity, and start and end sensing time points. The sensing bandwidth information is used to determine bandwidth for sending or receiving the sensing signal. In this case, the second sensing network element may perform the sensing based on the sensing time information and/or the sensing bandwidth information.

In a possible design manner, the second request message may further include data indication information and/or address information. The data indication information may indicate that sensing data carries a time stamp or a sequence number, and the address information may indicate an address for sending the sensing data. In this case, after obtaining the sensing data, the third sensing network element includes the time stamp or the sequence number in the sent sensing data, so that the first sensing network element performs fusion processing on the sensing data.

For the third sensing network element, the address information indicates the address of the first sensing network element, or an address of a sensing network element cooperating with the third sensing network element, for example, an address of the second sensing network element. In this case, the third sensing network element may send the sensing data to the address of the first sensing network element, or may send the sensing data to the address of the second sensing network element, and the second sensing network element sends the sensing data to the first sensing network element.

In a possible design manner, the second request message may further include identification information of the second sensing network element and/or second primary-secondary indication information. The second primary-secondary indication information may indicate that the third sensing network element is a primary sensing network element or a secondary sensing network element. In this case, the third sensing network element may cooperate with the second sensing network element by using the identification information of the second sensing network element.

In a possible design manner, the second request message may further include sensing time information and/or sensing bandwidth information. The sensing time information may include one or more of the following: sensing duration, a sensing periodicity, and start and end sensing time points. The sensing bandwidth information may be used to determine bandwidth for sending or receiving the sensing signal. In this case, the third sensing network element may perform the sensing based on the sensing time information and/or the sensing bandwidth information.

In a possible design manner, the communication method provided in the first aspect may further include: receiving a third request message from the first network element. The third request message may be used to request the first sensing service, and the third request message may include the sensing service information and/or the first indication information. In other words, the first sensing service may be requested by the first network element. Optionally, the first network element may be a core network element, an external application server (application server, AS), a terminal device, or the like.

In a possible design manner, the communication method provided in the first aspect may further include: receiving the sensing capability information and/or the sensing resource information from the second sensing network element.

In a possible design manner, the communication method provided in the first aspect may further include: receiving the sensing capability information and/or the sensing resource information from the at least one third sensing network element.

According to a second aspect, a communication method is provided. The communication method includes: receiving a first request message from a first sensing network element, and performing sensing based on first sensing mode information. The first request message is used to request a second sensing network element to perform sensing, the first request message includes the first sensing mode information, and the first sensing mode information indicates cooperative sensing.

In a possible design manner, the first sensing mode information may include first operation mode information, and the first operation mode information may indicate an operation mode of the second sensing network element.

In a possible design manner, the first operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the performing sensing based on first sensing mode information includes: performing the sensing based on the first sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the first request message may further include the sensing time information and/or the sensing bandwidth information.

In a possible design manner, the communication method provided in the second aspect may further include: sending sensing data based on data indication information and/or address information. The data indication information may indicate that the sensing data carries a time stamp or a sequence number, and the address information may indicate an address for sending the sensing data.

In a possible design manner, the first request message may further include the data indication information and/or the address information.

In a possible design manner, the first request message may further include identification information of at least one third sensing network element and/or first primary-secondary indication information. The first primary-secondary indication information may indicate that the second sensing network element is a primary sensing network element or a secondary sensing network element.

In a possible design manner, the communication method provided in the second aspect may further include: sending the sensing time information and/or the sensing bandwidth information to the third sensing network element based on the identification information of the at least one third sensing network element. The sensing time information may include one or more of the following: the sensing duration, the sensing periodicity, and the start and end sensing time points. The sensing bandwidth information may be used to determine the bandwidth for sending or receiving the sensing signal.

In a possible design manner, the sending the sensing time information and/or the sensing bandwidth information to the third sensing network element based on the identification information of the at least one third sensing network element may include: when the first primary-secondary indication information indicates that the second sensing network element is the primary sensing network element, sending the sensing time information and/or the sensing bandwidth information to the third sensing network element based on the identification information of the at least one third sensing network element.

In a possible design manner, the communication method provided in the second aspect may further include: sending sensing capability information and/or sensing resource information to the first sensing network element. The sensing resource information may indicate a resource for sending the sensing signal.

In addition, for a technical effect of the communication method in the second aspect, refer to the technical effect of the communication method in any possible implementation of the first aspect. Details are not described herein again.

According to a third aspect, a communication method is provided. The communication method includes: receiving a second request message from a first sensing network element, and performing sensing based on second sensing mode information. The second request message may be used to request at least one third sensing network element to perform sensing, the second request message includes the second sensing mode information, and the second sensing mode information indicates cooperative sensing.

In a possible design manner, the second sensing mode information may include second operation mode information, and the second operation mode information may indicate an operation mode of the third sensing network element.

In a possible design manner, the second operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the performing sensing based on second sensing mode information includes: performing the sensing based on the second sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the second request message further includes the sensing time information and/or the sensing bandwidth information.

In a possible design manner, the communication method provided in the third aspect may further include: sending sensing data based on data indication information and/or address information. The data indication information may indicate that the sensing data carries a time stamp or a sequence number, and the address information indicates an address for sending the sensing data.

In a possible design manner, the second request message may further include the data indication information and/or the address information.

In a possible design manner, the second request message may further include identification information of a second sensing network element and/or second primary-secondary indication information. The second primary-secondary indication information may indicate that the third sensing network element is a primary sensing network element or a secondary sensing network element.

In a possible design manner, the communication method provided in the third aspect may further include: receiving the sensing time information and/or the sensing bandwidth information from the second sensing network element. The sensing time information may include one or more of the following: the sensing duration, the sensing periodicity, and the start and end sensing time points. The sensing bandwidth information may be used to determine the bandwidth for sending or receiving the sensing signal.

In a possible design manner, the receiving the sensing time information and/or the sensing bandwidth information from the second sensing network element may include: when the second primary-secondary indication information indicates that the third sensing network element is the secondary sensing network element, receiving the sensing time information and/or the sensing bandwidth information from the second sensing network element.

In a possible design manner, the communication method provided in the third aspect may further include: sending sensing capability information and/or sensing resource information to the first sensing network element. The sensing resource information may indicate a resource for sending the sensing signal.

In addition, for a technical effect of the communication method in the third aspect, refer to the technical effect of the communication method in any possible implementation of the first aspect. Details are not described herein again.

According to a fourth aspect, a communication method is provided. The communication method includes: determining that a first sensing service uses cooperative sensing, sending a fourth request message to at least one third sensing network element, and performing sensing based on a mode of the cooperative sensing. The fourth request message is used to request the third sensing network element to perform sensing, the fourth request message includes third sensing mode information, and the third sensing mode information indicates the cooperative sensing.

Based on the communication method according to the fourth aspect, a second sensing network element determines that the first sensing service uses the cooperative sensing, and sends the fourth request message to the at least one third sensing network element, to request the third sensing network element to perform the sensing. The fourth request message includes the third sensing mode information indicating the cooperative sensing. The second sensing network element performs the sensing based on the cooperative sensing mode, and the third sensing network element performs the sensing based on the third sensing mode information. In this way, sensing can be performed in the cooperative sensing mode, to improving sensing accuracy.

In a possible design manner, the third sensing mode information may include third operation mode information, and the third operation mode information may indicate an operation mode of the third sensing network element.

In a possible design manner, the communication method provided in the fourth aspect may further include: determining at least one piece of third operation mode information based on the cooperative sensing mode. In other words, the operation mode of the third sensing network element may be determined by the second sensing network element. For example, the second sensing network element is a primary sensing network element.

In a possible design manner, the communication method provided in the fourth aspect may further include: determining fourth operation mode information based on the cooperative sensing mode. The fourth operation mode information may indicate an operation mode of the second sensing network element, and the operation mode of the second sensing network element and the operation mode of the at least one third sensing network element are used to implement the cooperative sensing. In other words, the operation mode of the second sensing network element may be determined by the second sensing network element.

In a possible design manner, the determining at least one piece of third operation mode information and the fourth operation mode information based on the cooperative sensing mode may include: determining the at least one piece of third operation mode information and the fourth operation mode information based on the cooperative sensing mode and at least one of first capability information and first sensing resource information. The first capability information may include sensing capability information of the second sensing network element and sensing capability information of the at least one third sensing network element, the first sensing resource information may include sensing resource information of the second sensing network element and sensing resource information of the at least one third sensing network element, and the sensing resource information may indicate a resource for sending a sensing signal.

In a possible design manner, the third operation mode information may include sending a sensing signal and receiving an echo signal, sending the sensing signal and not receiving the echo signal, or receiving the echo signal and not sending the sensing signal.

In a possible design manner, the fourth operation mode information may include sending a sensing signal and receiving an echo signal, sending the sensing signal and not receiving the echo signal, or receiving the echo signal and not sending the sensing signal.

In a possible design manner, the determining that a first sensing service uses cooperative sensing may include: receiving a first request message from a first sensing network element. The first request message may include first sensing mode information, and the first sensing mode information may indicate the cooperative sensing. In other words, the fourth aspect may be combined with the first aspect, and that the first sensing service uses the cooperative sensing may be received by the second sensing network element from the first sensing network element.

Optionally, the cooperative sensing may refer to cooperative sensing or single-station sensing, or the cooperative sensing may refer to a specific mode of the cooperative sensing, for example, a single base station acting as a transmitter and a receiver, different base stations acting as a transmitter and a receiver, one base station acting as a transmitter and multiple base stations acting as receivers, or multiple base stations acting as transmitters and one base station acting as a receiver.

Optionally, the cooperative sensing received by the second sensing network element from the first sensing network element may be cooperative sensing or single-station sensing, or may be a specific mode of the cooperative sensing. When the cooperative sensing received by the second sensing network element from the first sensing network element is the cooperative sensing or the single-station sensing, the second sensing network element may determine a specific mode of the cooperative sensing.

In a possible design manner, the determining that a first sensing service uses cooperative sensing may include: determining, based on one or more of sensing service information, the first capability information, and the first sensing resource information, that the first sensing service uses the cooperative sensing. The sensing service information may include a service type of the first sensing service and/or a service requirement of the first sensing service, the first capability information may include the sensing capability information of the second sensing network element and the sensing capability information of the at least one third sensing network element, the first sensing resource information may include the sensing resource information of the second sensing network element and the sensing resource information of the at least one third sensing network element, and the sensing resource information may indicate the resource for sending the sensing signal. In other words, that the first sensing service uses the cooperative sensing may be determined by the second sensing network element.

In a possible design manner, the sensing service information may further include one or more of the following: a correspondence between the service type of the first sensing service and the cooperative sensing, and a correspondence between the service requirement of the first sensing service and the cooperative sensing.

In a possible design manner, the fourth request message may further include data indication information and/or address information. The data indication information may indicate that sensing data carries a time stamp or a sequence number, and the address information may indicate an address for sending the sensing data.

In a possible design manner, the fourth request message may further include sensing time information and/or sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the communication method provided in the fourth aspect may further include: receiving the sensing capability information and/or the sensing resource information from the at least one third sensing network element. The sensing resource information indicates the resource for sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In addition, for a technical effect of the communication method in the fourth aspect, refer to the technical effect of the communication method in any possible implementation of the first aspect. Details are not described herein again.

According to a fifth aspect, a communication method is provided. The communication method includes: receiving a fourth request message from a second sensing network element, and performing sensing based on third sensing mode information. The fourth request message is used to request a third sensing network element to perform sensing, the fourth request message includes the third sensing mode information, and the third sensing mode information indicates cooperative sensing.

In a possible design manner, the third sensing mode information may include third operation mode information, and the third operation mode information may indicate an operation mode of the third sensing network element.

In a possible design manner, the third operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the performing sensing based on third sensing mode information includes: performing sensing based on the third sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the fourth request message may further include the sensing time information and/or the sensing bandwidth information.

In a possible design manner, the communication method provided in the fifth aspect may further include: sending sensing data based on data indication information and/or address information. The data indication information may indicate that the sensing data carries a time stamp or a sequence number, and the address information may indicate an address for sending the sensing data.

In a possible design manner, the fourth request message may further include the data indication information and/or the address information.

In a possible design manner, the communication method provided in the fifth aspect may further include: sending sensing capability information and/or sensing resource information to the second sensing network element. The sensing resource information indicates a resource for sending the sensing signal.

In addition, for a technical effect of the communication method in the fifth aspect, refer to the technical effect of the communication method in any possible implementation of the fourth aspect. Details are not described herein again.

According to a sixth aspect, a communication apparatus is provided. The communication apparatus includes a processing module and a transceiver module.

The processing module is configured to determine that a first sensing service uses cooperative sensing. The transceiver module is configured to send a first request message to a second sensing network element. The first request message is used to request the second sensing network element to perform sensing, the first request message includes first sensing mode information, and the first sensing mode information indicates the cooperative sensing.

In a possible design manner, the transceiver module is further configured to send a second request message to at least one third sensing network element. The second request message may be used to request the at least one third sensing network element to perform sensing, the second request message may include second sensing mode information, and the second sensing mode information may indicate the cooperative sensing.

In a possible design manner, the first sensing mode information may include first operation mode information, and the first operation mode information may indicate an operation mode of the second sensing network element.

In a possible design manner, the second sensing mode information may include second operation mode information, the second operation mode information may indicate an operation mode of the third sensing network element, and the operation mode of the second sensing network element and the operation mode of the at least one third sensing network element are used to implement the cooperative sensing.

In a possible design manner, the processing module is further configured to determine the first operation mode information and at least one piece of second operation mode information based on the cooperative sensing mode.

In a possible design manner, the processing module is further configured to determine the first operation mode information and the at least one piece of second operation mode information based on the cooperative sensing mode and at least one of first capability information and first sensing resource information. The first capability information may include sensing capability information of the second sensing network element and sensing capability information of the at least one third sensing network element, the first sensing resource information may include sensing resource information of the second sensing network element and sensing resource information of the at least one third sensing network element, and the sensing resource information indicates a resource for sending a sensing signal.

In a possible design manner, the first operation mode information may include sending a sensing signal and receiving an echo signal, sending the sensing signal and not receiving the echo signal, or receiving the echo signal and not sending the sensing signal.

In a possible design manner, the second operation mode information may include sending a sensing signal and receiving an echo signal, sending the sensing signal and not receiving the echo signal, or receiving the echo signal and not sending the sensing signal.

In a possible design manner, the transceiver module is further configured to send the first request message to the second sensing network element based on the sensing capability information of the second sensing network element.

In a possible design manner, the processing module is further configured to determine, based on one or more of sensing service information, first indication information, sensing result information, the first capability information, and the first sensing resource information, that the first sensing service uses the cooperative sensing. The sensing service information may include a service type of the first sensing service and/or a service requirement of the first sensing service, the first indication information indicates a sensing mode expected by the first network element, the sensing result information may include whether sensing data obtained in a single-station sensing mode meets the service requirement, the first capability information may include the sensing capability information of the second sensing network element and the sensing capability information of the at least one third sensing network element, the first sensing resource information may include the sensing resource information of the second sensing network element and the sensing resource information of the at least one third sensing network element, and the sensing resource information indicates the resource that can be used to send the sensing signal.

In a possible design manner, the sensing service information may further include one or more of the following: a correspondence between the service type of the first sensing service and the cooperative sensing, and a correspondence between the service requirement of the first sensing service and the cooperative sensing.

In a possible design manner, the first request message may further include data indication information and/or address information. The data indication information may indicate that the sensing data carries a time stamp or a sequence number, and the address information indicates an address for sending the sensing data.

In a possible design manner, the first request message may further include identification information of the at least one third sensing network element and/or first primary-secondary indication information. The first primary-secondary indication information may indicate that the second sensing network element is a primary sensing network element or a secondary sensing network element.

In a possible design manner, the first request message may further include sensing time information and/or sensing bandwidth information. The sensing time information may include one or more of the following: sensing duration, a sensing periodicity, and start and end sensing time points. The sensing bandwidth information is used to determine bandwidth for sending or receiving the sensing signal.

In a possible design manner, the second request message may further include data indication information and/or address information. The data indication information may indicate that sensing data carries a time stamp or a sequence number, and the address information may indicate an address for sending the sensing data.

In a possible design manner, the second request message may further include identification information of the second sensing network element and/or second primary-secondary indication information. The second primary-secondary indication information may indicate that the third sensing network element is a primary sensing network element or a secondary sensing network element.

In a possible design manner, the second request message may further include sensing time information and/or sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the transceiver module is further configured to receive a third request message from a first network element. The third request message may be used to request the first sensing service, and the third request message may include the sensing service information and/or the first indication information.

In a possible design manner, the transceiver module is further configured to receive the sensing capability information and/or the sensing resource information from the second sensing network element.

In a possible design manner, the transceiver module is further configured to receive the sensing capability information and/or the sensing resource information from the at least one third sensing network element.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

It should be noted that the transceiver module in the sixth aspect may include a receiving module and a sending module. The receiving module is configured to receive data and/or signaling from the second sensing network element, the at least one third sensing network element, and the first network element. The sending module is configured to send data and/or signaling to the second sensing network element, the at least one third sensing network element, and the first network element. A specific implementation of the transceiver module is not specifically limited in this application.

Optionally, the communication apparatus in the sixth aspect may further include a storage module. The storage module stores a program or instructions. When the processing module executes the program or the instructions, the communication apparatus in the sixth aspect is enabled to perform the method according to the first aspect.

It should be noted that the communication apparatus in the sixth aspect may be a first sensing network element, or may be a chip (system) or another part or component that may be disposed in the first sensing network element. This is not limited in this application.

In addition, for a technical effect of the communication apparatus in the sixth aspect, refer to the technical effect of the communication method in any possible implementation of the first aspect. Details are not described herein again.

According to a seventh aspect, a communication apparatus is provided. The communication apparatus includes a processing module and a transceiver module.

The transceiver module is configured to receive a first request message from a first sensing network element. The processing module is configured to perform sensing based on first sensing mode information. The first request message is used to request the communication apparatus to perform sensing, the first request message includes the first sensing mode information, and the first sensing mode information indicates cooperative sensing.

In a possible design manner, the first sensing mode information may include first operation mode information, and the first operation mode information may indicate an operation mode of the communication apparatus.

In a possible design manner, the first operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the processing module is further configured to perform sensing based on the first sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the first request message may further include the sensing time information and/or the sensing bandwidth information.

In a possible design manner, the transceiver module is further configured to send sensing data based on data indication information and/or address information. The data indication information may indicate that the sensing data carries a time stamp or a sequence number, and the address information may indicate an address for sending the sensing data.

In a possible design manner, the first request message may further include the data indication information and/or the address information.

In a possible design manner, the first request message may further include identification information of the at least one third sensing network element and/or first primary-secondary indication information. The first primary-secondary indication information may indicate that the communication apparatus is a primary sensing network element or a secondary sensing network element.

In a possible design manner, the transceiver module is further configured to send the sensing time information and/or the sensing bandwidth information to the third sensing network element based on the identification information of the at least one third sensing network element. The sensing time information may include one or more of the following: the sensing duration, the sensing periodicity, and the start and end sensing time points. The sensing bandwidth information may be used to determine the bandwidth for sending or receiving the sensing signal.

In a possible design manner, the transceiver module is further configured to: when the first primary-secondary indication information indicates that the communication apparatus is the primary sensing network element, send the sensing time information and/or the sensing bandwidth information to the third sensing network element based on the identification information of the at least one third sensing network element.

In a possible design manner, the transceiver module is further configured to send sensing capability information and/or sensing resource information to the first sensing network element. The sensing resource information may indicate a resource for sending the sensing signal.

It should be noted that the transceiver module in the seventh aspect may include a receiving module and a sending module. The receiving module is configured to receive data and/or signaling from the first sensing network element and the at least one third sensing network element. The sending module is configured to send data and/or signaling to the first sensing network element and the at least one third sensing network element. A specific implementation of the transceiver module is not specifically limited in this application.

Optionally, the communication apparatus in the seventh aspect may further include a storage module. The storage module stores a program or instructions. When the processing module executes the program or the instructions, the communication apparatus in the seventh aspect is enabled to perform the method according to the second aspect.

It should be noted that the communication apparatus in the seventh aspect may be a second sensing network element, or may be a chip (system) or another part or component that may be disposed in the second sensing network element. This is not limited in this application.

In addition, for a technical effect of the communication apparatus in the seventh aspect, refer to the technical effect of the communication method in any possible implementation of the second aspect. Details are not described herein again.

According to an eighth aspect, a communication apparatus is provided. The communication apparatus includes a processing module and a transceiver module.

The transceiver module is configured to: receive a second request message from a first sensing network element, and perform sensing based on second sensing mode information. The second request message may be used to request at least one communication apparatus to perform sensing, the second request message may include the second sensing mode information, and the second sensing mode information may indicate cooperative sensing.

In a possible design manner, the second sensing mode information may include second operation mode information, and the second operation mode information may indicate an operation mode of the communication apparatus.

In a possible design manner, the second operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the processing module is further configured to perform sensing based on the second sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the second request message further includes the sensing time information and/or the sensing bandwidth information.

In a possible design manner, the transceiver module is further configured to send sensing data based on data indication information and/or address information. The data indication information may indicate that the sensing data carries a time stamp or a sequence number, and the address information indicates an address for sending the sensing data.

In a possible design manner, the second request message may further include the data indication information and/or the address information.

In a possible design manner, the second request message may further include identification information of a second sensing network element and/or second primary-secondary indication information. The second primary-secondary indication information may indicate that the communication apparatus is a primary sensing network element or a secondary sensing network element.

In a possible design manner, the transceiver module is further configured to receive the sensing time information and/or the sensing bandwidth information from the second sensing network element. The sensing time information may include one or more of the following: the sensing duration, the sensing periodicity, and the start and end sensing time points. The sensing bandwidth information may be used to determine the bandwidth for sending or receiving the sensing signal.

In a possible design manner, the transceiver module is further configured to: when the second primary-secondary indication information indicates that the communication apparatus is the secondary sensing network element, receive the sensing time information and/or the sensing bandwidth information from the second sensing network element.

In a possible design manner, the transceiver module is further configured to send sensing capability information and/or sensing resource information to the first sensing network element. The sensing resource information may indicate a resource for sending the sensing signal.

It should be noted that the transceiver module in the eighth aspect may include a receiving module and a sending module. The receiving module is configured to receive data and/or signaling from the first sensing network element and the second sensing network element. The sending module is configured to send data and/or signaling to the first sensing network element and the second sensing network element. A specific implementation of the transceiver module is not specifically limited in this application.

Optionally, the communication apparatus in the eighth aspect may further include a storage module. The storage module stores a program or instructions. When the processing module executes the program or the instructions, the communication apparatus in the eighth aspect is enabled to perform the method according to the third aspect.

It should be noted that the communication apparatus in the eighth aspect may be a third sensing network element, or may be a chip (system) or another part or component that may be disposed in the third sensing network element. This is not limited in this application.

In addition, for a technical effect of the communication apparatus in the eighth aspect, refer to the technical effect of the communication method in any possible implementation of the third aspect. Details are not described herein again.

According to a ninth aspect, a communication apparatus is provided. The communication apparatus includes a processing module and a transceiver module.

The processing module is configured to determine that a first sensing service uses cooperative sensing. The transceiver module is configured to: send a fourth request message to at least one third sensing network element, and perform sensing based on the cooperative sensing mode. The fourth request message is used to request the third sensing network element to perform sensing, the fourth request message includes third sensing mode information, and the third sensing mode information indicates the cooperative sensing.

In a possible design manner, the third sensing mode information may include third operation mode information, and the third operation mode information may indicate an operation mode of the third sensing network element.

In a possible design manner, the processing module is further configured to determine at least one piece of third operation mode information based on the cooperative sensing mode.

In a possible design manner, the processing module is further configured to determine fourth operation mode information based on the cooperative sensing mode. The fourth operation mode information may indicate an operation mode of the communication apparatus, and the operation mode of the communication apparatus and the operation mode of the at least one third sensing network element are used to implement the cooperative sensing.

In a possible design manner, the processing module is further configured to determine the at least one piece of third operation mode information and the fourth operation mode information based on the cooperative sensing mode and at least one of first capability information and first sensing resource information. The first capability information may include sensing capability information of the communication apparatus and sensing capability information of the at least one third sensing network element, the first sensing resource information may include sensing resource information of the communication apparatus and sensing resource information of the at least one third sensing network element, and the sensing resource information indicates a resource for sending a sensing signal.

In a possible design manner, the third operation mode information may include sending a sensing signal and receiving an echo signal, sending the sensing signal and not receiving the echo signal, or receiving the echo signal and not sending the sensing signal.

In a possible design manner, the fourth operation mode information may include sending a sensing signal and receiving an echo signal, sending the sensing signal and not receiving the echo signal, or receiving the echo signal and not sending the sensing signal.

In a possible design manner, the transceiver module is further configured to receive a first request message from a first sensing network element. The first request message may include first sensing mode information, and the first sensing mode information may indicate the cooperative sensing.

In a possible design manner, the processing module is further configured to determine, based on one or more of sensing service information, the first capability information, and the first sensing resource information, that the first sensing service uses the cooperative sensing. The sensing service information may include a service type of the first sensing service and/or a service requirement of the first sensing service, the first capability information may include the sensing capability information of the communication apparatus and the sensing capability information of the at least one third sensing network element, the first sensing resource information may include the sensing resource information of the communication apparatus and the sensing resource information of the at least one third sensing network element, and the sensing resource information may indicate the resource for sending the sensing signal.

In a possible design manner, the sensing service information may further include one or more of the following: a correspondence between the service type of the first sensing service and the cooperative sensing, and a correspondence between the service requirement of the first sensing service and the cooperative sensing.

In a possible design manner, the fourth request message may further include data indication information and/or address information. The data indication information may indicate that sensing data carries a time stamp or a sequence number, and the address information may indicate an address for sending the sensing data.

In a possible design manner, the fourth request message may further include sensing time information and/or sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the transceiver module is further configured to receive the sensing capability information and/or the sensing resource information from the at least one third sensing network element. The sensing resource information indicates the resource for sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

It should be noted that the transceiver module in the ninth aspect may include a receiving module and a sending module. The receiving module is configured to receive data and/or signaling from the first sensing network element and the at least one third sensing network element. The sending module is configured to send data and/or signaling to the first sensing network element and the at least one third sensing network element. A specific implementation of the transceiver module is not specifically limited in this application.

Optionally, the communication apparatus in the ninth aspect may further include a storage module. The storage module stores a program or instructions. When the processing module executes the program or the instructions, the communication apparatus in the ninth aspect is enabled to perform the method according to the fourth aspect.

It should be noted that the communication apparatus in the ninth aspect may be a second sensing network element, or may be a chip (system) or another part or component that may be disposed in the second sensing network element. This is not limited in this application.

In addition, for a technical effect of the communication apparatus in the ninth aspect, refer to the technical effect of the communication method in any possible implementation of the fourth aspect. Details are not described herein again.

According to a tenth aspect, a communication apparatus is provided. The communication apparatus includes a processing module and a transceiver module.

The transceiver module is configured to receive a fourth request message from a second sensing network element. The processing module is configured to perform sensing based on third sensing mode information. The fourth request message is used to request the communication apparatus to perform sensing, the fourth request message includes the third sensing mode information, and the third sensing mode information indicates cooperative sensing.

In a possible design manner, the third sensing mode information may include third operation mode information, and the third operation mode information may indicate an operation mode of the communication apparatus.

In a possible design manner, the third operation mode information may include sending a sensing signal and receiving an echo signal, sending the sensing signal and not receiving the echo signal, or receiving the echo signal and not sending the sensing signal.

In a possible design manner, the cooperative sensing mode may include a single base station acting as a transmitter and a receiver, different base stations acting as a transmitter and a receiver, one base station acting as a transmitter and multiple base stations acting as receivers, or multiple base stations acting as transmitters and one base station acting as a receiver.

In a possible design manner, the processing module is further configured to perform sensing based on the third sensing mode information and one or more of sensing time information and sensing bandwidth information. The sensing time information may include one or more of the following: sensing duration, a sensing periodicity, and start and end sensing time points. The sensing bandwidth information may be used to determine bandwidth for sending or receiving the sensing signal.

In a possible design manner, the fourth request message may further include the sensing time information and/or the sensing bandwidth information.

In a possible design manner, the transceiver module is further configured to send sensing data based on data indication information and/or address information. The data indication information may indicate that sensing data carries a time stamp or a sequence number, and the address information may indicate an address for sending the sensing data.

In a possible design manner, the fourth request message may further include the data indication information and/or the address information.

In a possible design manner, the transceiver module is further configured to send sensing capability information and/or sensing resource information to the second sensing network element. The sensing resource information indicates a resource for sending the sensing signal.

It should be noted that the transceiver module in the tenth aspect may include a receiving module and a sending module. The receiving module is configured to receive data and/or signaling from a first sensing network element and the second sensing network element. The sending module is configured to send data and/or signaling to the first sensing network element and the second sensing network element. A specific implementation of the transceiver module is not specifically limited in this application.

Optionally, the communication apparatus in the tenth aspect may further include a storage module. The storage module stores a program or instructions. When the processing module executes the program or the instructions, the communication apparatus in the tenth aspect is enabled to perform the method according to the fifth aspect.

It should be noted that the communication apparatus in the tenth aspect may be a third sensing network element, or may be a chip (system) or another part or component that may be disposed in the third sensing network element. This is not limited in this application.

In addition, for a technical effect of the communication apparatus in the tenth aspect, refer to the technical effect of the communication method in any possible implementation of the fifth aspect. Details are not described herein again.

According to an eleventh aspect, a communication apparatus is provided. The communication apparatus includes a processor. The processor is coupled to a memory, and the memory is configured to store a computer program.

The processor is configured to execute the computer program stored in the memory, so that the communication method according to any possible implementation of the first aspect to the fifth aspect is performed.

In a possible design, the communication apparatus in the eleventh aspect may further include a transceiver. The transceiver may be a transceiver circuit or an input/output port. The transceiver may be used by the communication apparatus to communicate with another communication device.

It should be noted that the input port may be configured to implement receiving functions in the first aspect to the fifth aspect, and the output port may be configured to implement sending functions in the first aspect to the fifth aspect.

In this application, the communication apparatus according to the eleventh aspect may be a first sensing network element, a second sensing network element, and at least one third sensing network element, or a chip or a chip system disposed inside the first sensing network element, the second sensing network element, and the at least one third sensing network element.

In addition, for a technical effect of the communication apparatus in the eleventh aspect, refer to the technical effect of the communication method in any possible implementation of the first aspect to the fifth aspect. Details are not described herein again.

According to a twelfth aspect, a communication system is provided. The communication system includes the communication apparatus according to the seventh aspect and the communication apparatus according to the eighth aspect, and may further include the communication apparatus according to the sixth aspect. Alternatively, the communication system includes the communication apparatus according to the ninth aspect and the communication apparatus according to the tenth aspect, and may further include the communication apparatus according to the sixth aspect.

Alternatively, the communication system includes the communication apparatus that is configured to implement the method according to the first aspect and that is according to the sixth aspect, the communication apparatus that is configured to implement the method according to the second aspect and that is according to the seventh aspect, and the communication apparatus that is configured to implement the method according to the third aspect and that is according to the eighth aspect. Alternatively, the communication system includes the communication apparatus that is configured to implement the method according to the first aspect and that is according to the sixth aspect, the communication apparatus that is configured to implement the method according to the fourth aspect and that is according to the ninth aspect, and the communication apparatus that is configured to implement the method according to the fifth aspect and that is according to the tenth aspect.

For example, the communication system may include a second sensing network element and at least one third sensing network element, may further include a first sensing network element, and may further include a first network element.

According to a thirteenth aspect, a chip system is provided. The chip system includes a logic circuit and an input/output port. The logic circuit is configured to implement processing functions in the first aspect to the fifth aspect, and the input/output port is configured to implement sending and receiving functions in the first aspect to the fifth aspect. Specifically, the input port may be configured to implement receiving functions in the first aspect to the fifth aspect, and the output port may be configured to implement sending functions in the first aspect to the fifth aspect.

In a possible design, the chip system further includes a memory, and the memory is configured to store program instructions and data for implementing functions in the first aspect to the fifth aspect.

The chip system may include a chip, or may include the chip and another discrete component.

According to a fourteenth aspect, a computer-readable storage medium is provided, and includes a computer program or instructions. When the computer program or the instructions are run on a computer, the communication method according to any possible implementation of the first aspect to the fifth aspect is performed.

According to a fifteenth aspect, a computer program product is provided, and includes a computer program or instructions. When the computer program or the instructions are run on a computer, the communication method according to any possible implementation of the first aspect to the fifth aspect is performed.

### BRIEF DESCRIPTION OF DRAWINGS

FIG. 1 is a schematic diagram of an architecture of a communication system according to an embodiment of this application;
FIG. 2 is a schematic diagram of an architecture of a communication system applied to a 5G network according to an embodiment of this application;
FIG. 3 is a schematic diagram of cooperative sensing according to an embodiment of this application;
FIG. 4 is a schematic diagram of single-station sensing according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic diagram of a structure of a communication apparatus according to an embodiment of this application; and
FIG. 8 is a schematic diagram of a structure of another communication apparatus according to an embodiment of this application.

### DESCRIPTION OF EMBODIMENTS

The following describes technical solutions of this application with reference to the accompanying drawings.

Technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, or a future communication system such as a 6th generation (6th generation, 6G) mobile communication system.

This application will present various aspects, embodiments, or features around a system including a plurality of devices, components, modules, and the like. It should be understood that each system may include another device, component, module, and the like, and/or may not include all devices, components, modules, and the like discussed with reference to the accompanying drawings. In addition, combinations of these schemes may also be used.

In addition, in embodiments of this application, the word such as "example" or "for example" is used to represent giving an example, an illustration, or a description. Any embodiment or design scheme described as an "example" in this application should not be explained as being more preferred or having more advantages than another embodiment or design scheme. Exactly, use of the word "example" is intended to present a related concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

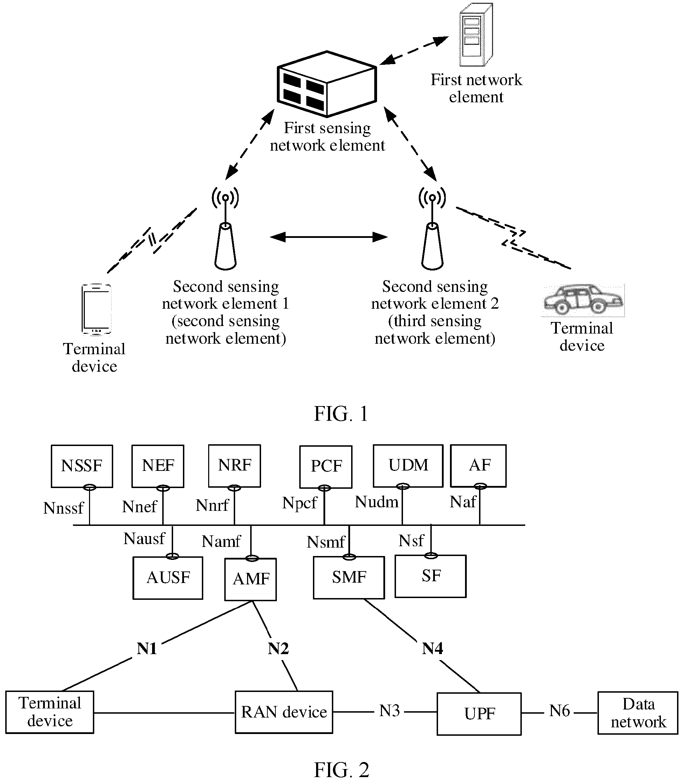

To better understand embodiments of this application, a communication system applicable to embodiments of this application is described in detail by using a communication system shown in FIG. 1 as an example. For example, FIG. 1 is a schematic diagram of an architecture of a communication system to which a communication method provided in an embodiment of this application is applied.

As shown in FIG. 1, the communication system includes at least two second sensing network elements, for example, a second sensing network element 1 and a second sensing network element 2. In the following embodiments of this application, for ease of differentiation, the second sensing network element 1 is also referred to as a second sensing network element, and the second sensing network element 2 is referred to as a third sensing network element. The second sensing network element has a sensing function, for example, detecting and/or collecting sensing data, and sending the sensing data to a first sensing network element or a first network element after obtaining the sensing data. The second sensing network element may be an access network device or one of core network elements, for example, one of 5G core (5G core, 5GC) network elements.

Optionally, the communication system may further include the first sensing network element. The first sensing network element may be responsible for a sensing service. For example, the first sensing network element may control the second sensing network element to detect and/or collect the sensing data according to an internal requirement of a network or a requirement of a demander (for example, the first network element) of the sensing service, or may provide the sensing service based on the sensing data, for example, provide the service sensing service to the demander of the sensing service, or perform optimization inside the network based on the service sensing data. The first sensing network element may be one of the core network elements, for example, one of the 5G core network elements, or the first sensing network element may not be a core network element, for example, an access network device or an external application server.

It should be noted that the first sensing network element may also be referred to as a sensing function SF network element. This is not limited in this application.

Optionally, the communication system may further include the first network element. The first network element may be configured to initiate a sensing request, to request the sensing service. Optionally, the communication system may further include a terminal device and/or a sensing target. The first network element may be a core network element (for example, an application function (application function, AF) network element), an external application server (for example, a first sensing service server), a terminal device, or the like.

The access network device is a device that is located on a network side of the communication system and that has a wireless transceiver function, or a chip or a chip system that may be disposed in the device. Optionally, the access network device may have a sensing function, for example, sensing signal sending and receiving functions and a signal processing function.

The access network device includes but is not limited to: an access point (access point, AP) in a wireless fidelity (wireless fidelity, Wi-Fi) system, for example, a home gateway, a router, a server, a switch, or a network bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), a wireless relay node, a wireless backhaul node, a transmission point (transmission and reception point, TRP, or transmission point, TP), may be a gNB or a transmission point (a TRP or a TP) in a 5G system such as an NR system, may be one or a group of antenna panels (including a plurality of antenna panels) of a base station in the 5G system, or may be a network node included in the gNB or the transmission point, for example, a baseband unit (BBU), a distributed unit (distributed unit, DU), or a road side unit (road side unit, RSU) having a base station function.

The terminal device is a terminal device that accesses the communication system and that has a wireless transceiver function, or a chip or a chip system that may be disposed in the terminal device. The terminal device may also be referred to as user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be customer premise equipment (customer premise equipment, CPE), a mobile phone (mobile phone), a wireless data card, a personal digital assistant (personal digital assistant, PDA) computer, a laptop computer (laptop computer), a tablet computer (Pad), a computer having a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart TV, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a handheld device (handset) having a wireless communication function, a computing device or other processing device connected to a wireless modem, a wearable device, a machine type communication terminal device, or an unmanned aerial vehicle provided with a communication terminal device. Compared with an ordinary terminal, the customer premise equipment has a larger volume and stronger functions, and may receive a signal sent by the access network device and send the signal to another terminal device. This is equivalent to performing secondary relay on the signal sent by the access network device. Terminal devices may communicate with each other by using an air interface technology (for example, an NR or LTE technology).

For another example, the terminal device in embodiments of this application may be an express delivery terminal (for example, a device that can monitor a location of a cargo vehicle, or a device that can monitor a temperature and humidity of cargo) in smart logistics, a wireless terminal (for example, a wearable device that can collect related data of poultry and livestock) in smart agriculture, a wireless terminal (for example, a smart elevator, a fire monitoring device, or a smart meter) in smart architecture, a wireless terminal (for example, a wearable device that can monitor a physiological status of a person or an animal) in smart healthcare, a wireless terminal (for example, a smart bus, a smart vehicle, a shared bicycle, a charging pile monitoring device, smart traffic lights, sensors such as a train detector and a gas station, an intelligent monitor, and an intelligent parking device) in intelligent transportation, or a wireless terminal (for example, a vending machine, a self-checkout machine, or an unmanned convenience store) in intelligent retail. For another example, the terminal device in this application may be a vehicle-mounted module, a vehicle-mounted part, a vehicle-mounted chip, or a vehicle-mounted unit that is built in a vehicle as one or more parts or units. The vehicle may implement a method provided in this application by using the vehicle-mounted module, the vehicle-mounted part, the vehicle-mounted chip, or the vehicle-mounted unit that is built in the vehicle.

In a sensing process, a sensed sensing target may be any object, a terminal device, a person, an animal, or the like that can be sensed by a sensing device. For example, in an intelligent transportation scenario, the sensing target may be a vehicle, a pedestrian, a brick on a road, an animal, or the like.

It should be noted that the communication method provided in embodiments of this application may be used between any two nodes shown in FIG. 1, for example, between the first sensing network element and the second sensing network element, between the second sensing network element and the third sensing network element, between the first sensing network element and the third sensing network element, or between the first network element and the first sensing network element. For specific implementation, refer to the following method embodiments. Details are not described herein.

It should be noted that the solutions in embodiments of this application may be further applied to another communication system, and a corresponding name may also be replaced with a name of a corresponding function in the another communication system.

It should be understood that FIG. 1 is merely a simplified schematic diagram of an example for ease of understanding. The communication system may further include another network device and/or another terminal device, which are/is not shown in FIG. 1.

Optionally, the communication system shown in FIG. 1 may be applied to a 5G network that is currently discussed, and may also be applied to other future networks. This is not specifically limited in embodiments of this application.

For example, the communication system shown in FIG. 1 is applied to the 5G network that is currently discussed. As shown in FIG. 2, the 5G network may further include a radio access network (radio access network, RAN) device, a user plane function (user plane function, UPF), an access and mobility management function (access and mobility management function, AMF), an authentication server function (authentication server function, AUSF), a network slice selection function (network slice selection function, NSSF), a network exposure function (network exposure function, NEF), a network repository function (network exposure function Repository Function, NRF), a policy control function (policy control function, PCF), unified data management (unified data management, UDM), an application function (application function, AF), and the like. The terminal device accesses the 5G network via the RAN device. The terminal device communicates with the AMF through an N1 interface (N1 for short). The RAN device may communicate with the AMF through an N2 interface (N2 for short). The RAN device may communicate with the UPF through an N3 interface (N3 for short). The SMF communicates with the UPF through an N4 interface (N4 for short). The UPF accesses a data network through an N6 interface (N6 for short).

In addition, control plane functions such as the AUSF, the AMF, the SMF, the NSSF, the NEF, the NRF, the PCF, the UDM, the SF, or the AF shown in FIG. 2 interact with each other through a service-oriented interface. For example, an external service-oriented interface provided by the AUSF is Nausf, an external service-oriented interface provided by the AMF is Namf, an external service-oriented interface provided by the SMF is Nsmf, an external service-oriented interface provided by the NSSF is Nnssf, an external service-oriented interface provided by the NEF is Nnef, an external service-oriented interface provided by the NRF is Nnrf, an external service-oriented interface provided by the PCF is Npcf, an external service-oriented interface provided by the UDM is Nudm, an external service-oriented interface provided by the SF is Nsf, and an external service-oriented interface provided by the AF is Naf.

The AMF network element is mainly responsible for signaling processing, for example, functions such as access control, mobility management, attachment and detachment, and gateway selection. When serving a session in the terminal device, the AMF network element may provide a control-plane storage resource for the session, to store a session identifier, an SMF network element identifier associated with the session identifier, and the like.

The SMF network element is responsible for user plane network element selection, user plane network element redirection, Internet protocol (internet protocol, IP) address allocation, bearer establishment, modification, and release, quality of service (quality of service, QoS) control, and the like.

The UPF network element is responsible for forwarding and receiving user data in the terminal device. The UPF network element may receive the user data from the data network, and transmit the user data to the terminal device via the RAN device. Alternatively, the UPF network element may receive the user data from the terminal device via the RAN device, and forward the user data to the data network. A transmission resource and a scheduling function that are used by the UPF network element to provide a service for the terminal device are managed and controlled by the SMF network element.

The AUSF supports 3GPP and non-3GPP access authentication. The NSSF network element is mainly responsible for network slice selection, and may determine, based on slice selection assistance information, subscription information, and the like of the terminal device, a network slice instance allowed to be accessed by the terminal device.

The NEF network element mainly supports secure interaction between a 3GPP network and a third-party application. The NRF network element supports registration and discovery of a network function. The PCF network element is responsible for policy control decision, and may provide policy rules to control plane functions and a traffic-based charging control function.

The UDM network element is mainly responsible for subscription data management of the terminal device, including storage and management of a terminal device identifier, access authorization of the terminal device, and the like. The SF network element is mainly responsible for controlling a sensing service, and provides the sensing service for the terminal device or a third party. The AF network element mainly supports interacting with a 3GPP core network to provide a service, for example, affecting data routing decision, a policy control function, or providing some services of the third party for a network side.

It should be noted that a network architecture to which the communication system shown in FIG. 1 is applicable is not limited in this application. The network architecture may further include a unified data repository (unified data repository, UDR) network element, a network data analytics function (network data analytics function, NWDAF) network element, and the like. The UDR network element may be configured to store and obtain subscription data used by the UDM and the PCF. The NWDAF network element may support collecting data from another network function and the AF network element, collecting data from operation, administration, and maintenance (operation, administration, and maintenance, OAM), and providing analysis information to the another network function and the AF network element.

To make embodiments of this application clearer, the following collectively describes some content and concepts related to embodiments of this application.

### 1. Single-station sensing:

In the single-station sensing, an echo signal corresponding to a sent sensing signal is received in a single direction, and the echo signal cannot be received in a plurality of directions, and sensing data of a reflected object cannot be obtained in the plurality of directions.

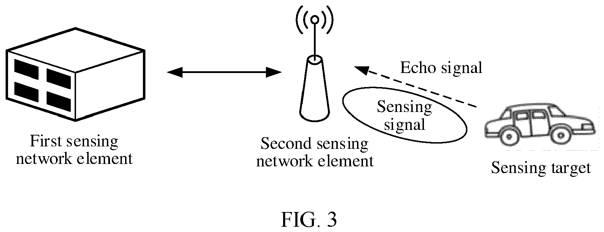

The following describes the single-station sensing with reference to FIG. 3.

As shown in FIG. 3, a first sensing network element controls only one second sensing network element to perform a sensing operation. The second sensing network element sends a sensing signal, receives an echo signal, and obtains sensing data, but cannot receive the echo signal in a plurality of directions. As a result, recognition accuracy is low.

### 2. Cooperative sensing:

In the cooperative sensing, a second sensing network element sends a sensing signal and/or receives an echo signal in a plurality of directions, may obtain more sensing data of a reflected object, and may perform fusion processing on the received sensing data, to improve recognition accuracy.

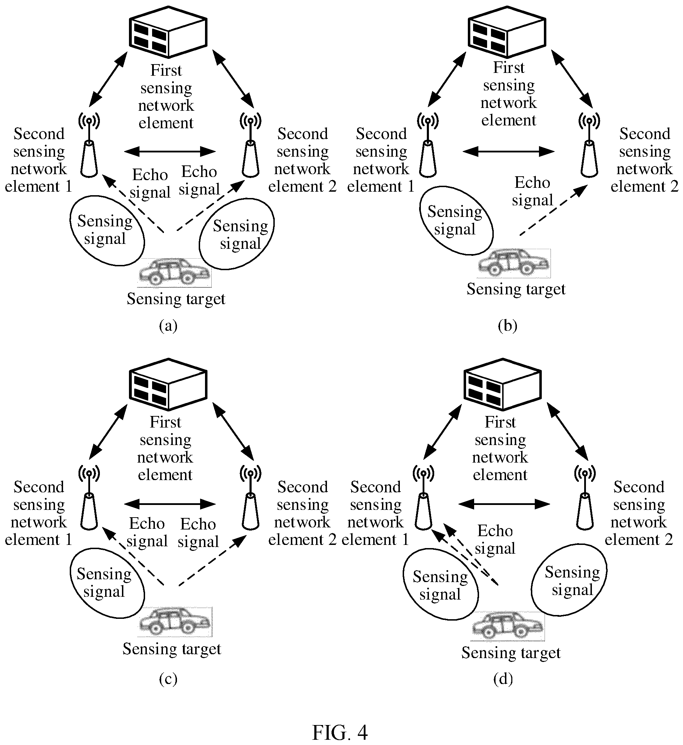

For example, a mode of the cooperative sensing may include but is not limited to: a single base station acting as a transmitter and a receiver, different base stations acting as a transmitter and a receiver, one base station acting as a transmitter and multiple base stations acting as receivers, or multiple base stations acting as transmitters and one base station acting as a receiver. The following describes the cooperative sensing mode with reference to FIG. 4. Two second sensing network elements are used as an example.
(a) in FIG. 4 shows the single base station acting as a transmitter and a receiver. A second sensing network element 1 and a second sensing network element 2 each separately send a sensing signal and receive an echo signal.
   In embodiments of this application, for the single base station acting as a transmitter and a receiver, a second sensing network element that has a capability of sending a sensing signal and receiving an echo signal and/or that has a current resource that can be used to send the sensing signal may be used as the second sensing network element 1, and a method for determining the second sensing network element 2 is similar to that for the second sensing network element 1.
(b) in FIG. 4 shows the different base stations acting as a transmitter and a receiver. A second sensing network element 1 sends a sensing signal, and a second sensing network element 2 receives an echo signal reflected by the sensing signal sent by the second sensing network element 1.
   In embodiments of this application, for the different base stations acting as a transmitter and a receiver, a second sensing network element that has a capability of sending a sensing signal and/or that has a current resource that can be used to send the sensing signal may be used as the second sensing network element 1, and a second sensing network element that has a capability of receiving an echo signal may be used as the second sensing network element 2. No requirement may be imposed on a resource of the second sensing network element 2.
(c) in FIG. 4 shows the one base station acting as a transmitter and multiple base stations acting as receivers. A second sensing network element 1 sends a sensing signal, and both the second sensing network element 1 and a second sensing network element 2 receive echo signals reflected by the sensing signal.
   In embodiments of this application, for the different base stations acting as a transmitter and a receiver, a second sensing network element that has a capability of sending a sensing signal and receiving an echo signal and/or that has a current resource that can be used to send the sensing signal may be used as the second sensing network element 1, and a second sensing network element that has a capability of receiving an echo signal may be used as the second sensing network element 2. No requirement may be imposed on a resource of the second sensing network element 2.
(d) in FIG. 4 shows the multiple base stations acting as transmitters and one base station acting as a receiver. A second sensing network element 1 sends a sensing signal and receives an echo signal reflected by the sensing signal. A second sensing network element 2 sends a sensing signal, and the second sensing network element 1 receives an echo signal reflected by the sensing signal sent by the second sensing network element 2.

In embodiments of this application, for the multiple base stations acting as transmitters and one base station acting as a receiver, a second sensing network element that has a capability of sending a sensing signal and receiving an echo signal and/or that has a current resource that can be used to send the sensing signal may be used as the second sensing network element 1. A second sensing network element that has a capability of sending a sensing signal and/or that has a current resource that can be used to send the sensing signal is used as the second sensing network element 2.

In the cooperative sensing shown in FIG. 4, the second sensing network element 1 and/or the second sensing network element 2 receive/receives the echo signals/echo signal to obtain sensing data, and may receive the echo signals in a plurality of directions, for example, a direction from a sensing target to the second sensing network element 1 and a direction from the sensing target to the second sensing network element 2. The obtained sensing data is rich, and this can improve sensing accuracy.

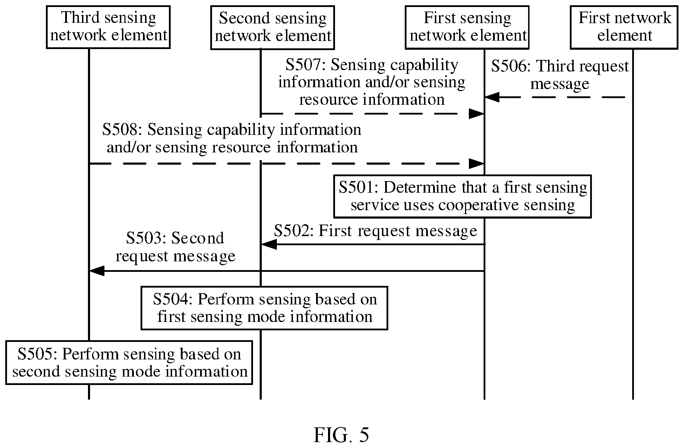

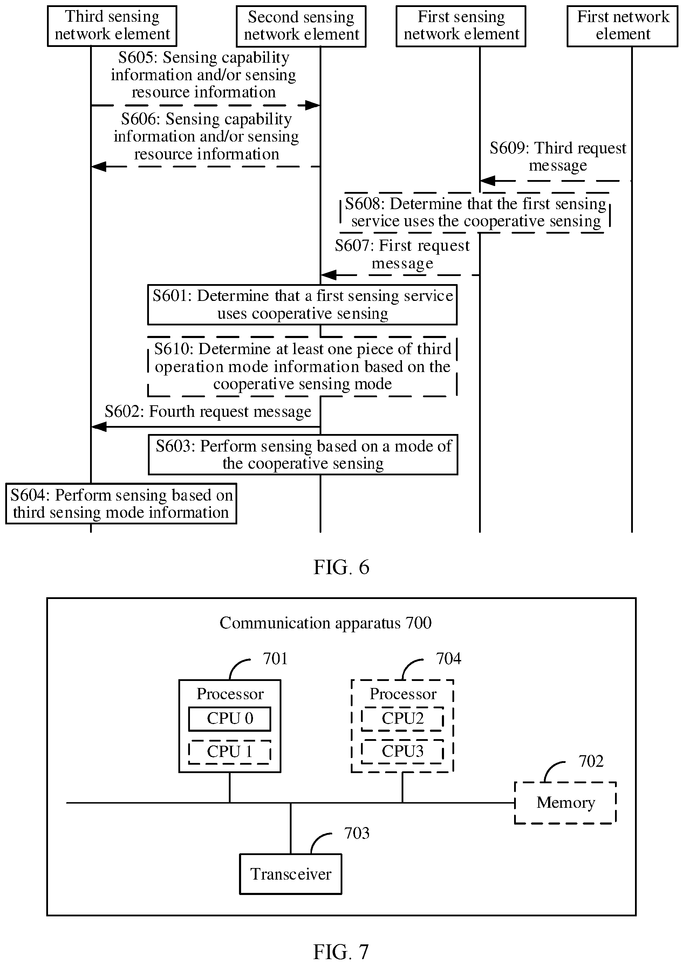

The following describes in detail the communication method provided in embodiments of this application with reference to FIG. 5 and FIG. 6.

For example, FIG. 5 is a schematic flowchart of a communication method according to an embodiment of this application.

As shown in FIG. 5, the communication method includes the following steps.

S501: A first sensing network element determines that a first sensing service uses cooperative sensing.

For an implementation of the cooperative sensing, refer to the foregoing descriptions related to FIG. 4. Details are not described herein again.

In a possible design manner, S501 may include: The first sensing network element determines, based on one or more of sensing service information, first indication information, sensing result information, first capability information, and first sensing resource information, that the first sensing service uses the cooperative sensing.

For example, the cooperative sensing may refer to a sensing mode of cooperative sensing or single-station sensing, or the cooperative sensing may refer to a specific mode of the cooperative sensing, for example, a single base station acting as a transmitter and a receiver, different base stations acting as a transmitter and a receiver, one base station acting as a transmitter and multiple base stations acting as receivers, or multiple base stations acting as transmitters and one base station acting as a receiver.

Optionally, the first sensing network element may first determine to use the cooperative sensing, and determine the specific cooperative sensing mode. For example, when the cooperative sensing mode includes a plurality of modes, usage of the cooperative sensing or the single-station sensing may be first determined. If the cooperative sensing is used, the specific cooperative sensing mode is further determined.

Alternatively, optionally, the first sensing network element may determine to use the cooperative sensing. For example, when the cooperative sensing mode includes one mode (where this mode may be understood as a default mode of the cooperative sensing), usage of the cooperative sensing or the single-station sensing may be directly determined. If the cooperative sensing is used, the default cooperative sensing mode is used.

In some embodiments, the sensing service information may include a service type of the first sensing service and/or a service requirement of the first sensing service.

For example, the first sensing network element may determine, based on the service type and/or the service requirement of the first sensing service, that the first sensing service needs to use the cooperative sensing.

For example, the service type of the first sensing service may include one or more of the following: object distribution, a map, driving, violation detection, object tracking, emergency event detection, object positioning, an object contour size, an object speed, weather prediction, a human posture, and human health.

For example, the service requirement of the first sensing service may include one or more of the following: a first sensing distance, a first sensing area, a first sensing speed range, a first sensing distance resolution, first sensing angle measurement precision, a first sensing speed resolution, a first sensing quality of service QoS requirement, a first sensing location point, a first sensing user equipment identifier, first sensing time information, first sensing object recognition accuracy, a first sensing object recognition false alarm rate, first sensing data precision, a first sensing data update frequency, a first sensing dimension indication, and a first sensing feedback manner. The first sensing feedback manner may include whether feedback is periodic, a feedback periodicity, feedback time, and the like.

Optionally, the sensing service information may further include one or more of the following: a correspondence between the service type of the first sensing service and the cooperative sensing, and a correspondence between the service requirement of the first sensing service and the cooperative sensing.

The correspondence between the service type of the first sensing service and the cooperative sensing is used as an example. For example, the service type of the first sensing service corresponds to the cooperative sensing or the single-station sensing. It is assumed that the driving corresponds to the cooperative sensing and the violation detection corresponds to the single-station sensing. When a service type of a first service is the driving, the first sensing network element may determine, based on the correspondence that the driving corresponds to the cooperative sensing, that the first sensing service uses the cooperative sensing. When the service type of the first service is the violation detection, the first sensing network element may determine, based on the correspondence that the violation detection corresponds to the single-station sensing, that the first sensing service uses the single-station sensing.

In some embodiments, the correspondence between the service type of the first sensing service and the cooperative sensing may be a correspondence between the service type of the first sensing service and the cooperative sensing mode. For example, the service type of the first sensing service corresponds to the single base station acting as a transmitter and a receiver, the different base stations acting as a transmitter and a receiver, the one base station acting as a transmitter and multiple base stations acting as receivers, or the multiple base stations acting as transmitters and one base station acting as a receiver.

For example, it is assumed that the driving corresponds to the single base station acting as a transmitter and a receiver, the object tracking corresponds to the different base stations acting as a transmitter and a receiver, and the emergency event detection corresponds to the single-station sensing. When the service type of the first service is the driving, the first sensing network element may determine, based on the correspondence that the driving corresponds to the single base station acting as a transmitter and a receiver, to use the single base station acting as a transmitter and a receiver. When the service type of the first service is the object tracking, the first sensing network element may determine, based on the correspondence that the object tracking corresponds to the different base stations acting as a transmitter and a receiver, to use the different base stations acting as a transmitter and a receiver. When the service type of the first service is the emergency event detection, the first sensing network element may determine, based on the correspondence that the emergency event detection corresponds to the single-station sensing, to use the single-station sensing.

It should be noted that for a specific implementation of the correspondence between the service requirement of the first sensing service and the cooperative sensing, refer to the specific implementation of the correspondence between the service type of the first sensing service and the cooperative sensing. Details are not described herein. The correspondence in the example is merely an example for description, and a specific correspondence is not limited during actual application.

Optionally, the first sensing network element may determine, based on the service requirement of the first sensing service and a preset service requirement threshold, that the first sensing service needs to use the cooperative sensing. The preset service requirement threshold may be preconfigured in the first sensing network element, or received by the first sensing network element from a PCF network element or a first network element.

The sensing object recognition accuracy is used as an example. The first sensing network element determines, based on that the sensing object recognition accuracy of the first sensing service is higher than a preset sensing object recognition accuracy threshold, that the first sensing service needs to use the cooperative sensing.

Optionally, the correspondence between the service type of the first sensing service and the cooperative sensing, and/or the correspondence between the service requirement of the first sensing service and the cooperative sensing may be preconfigured in the first sensing network element, or received by the first sensing network element from the PCF network element or the first network element.

In some embodiments, the first indication information may indicate a sensing mode expected by the first network element.

For example, the first network element expects to use the single-station sensing or the cooperative sensing. Alternatively, the first network element expects to use the single base station acting as a transmitter and a receiver, the different base stations acting as a transmitter and a receiver, the one base station acting as a transmitter and multiple base stations acting as receivers, or the multiple base stations acting as transmitters and one base station acting as a receiver. In this case, the first sensing network element may determine, based on the sensing mode expected by the first network element, that the first sensing service uses the cooperative sensing.

In a possible design manner, the communication method shown in FIG. 5 may further include S506: The first network element sends a third request message to the first sensing network element. Correspondingly, the first sensing network element receives the third request message from the first network element.

Optionally, the third request message is used to request the first sensing service.

Optionally, the third request message may include the sensing service information and/or the first indication information.

In other words, the sensing service information and/or the first indication information may be from the first network element.

Optionally, the first network element may be a core network element (for example, an AMF network element or an NWDAF network element), a server of the first sensing service, a terminal device, or the like. If the first network element is the core network element, the third request message is communicated through a service-oriented interface. If the first network element is the server of the first sensing service, the third request message may be directly sent by the server of the first sensing service to the first sensing network element or sent to the first sensing network element via a NEF network element. If the first network element is the terminal device, the terminal device sends the third request message to the AMF, and the AMF sends the third request message to the first sensing network element.

In some embodiments, the first capability information includes sensing capability information of a second sensing network element and/or sensing capability information of at least one third sensing network element.

For example, the sensing capability information may include but is not limited to one or more of the following: supporting sending a sensing signal and receiving an echo signal, supporting sending the sensing signal but not supporting receiving the echo signal, supporting receiving the echo signal but not supporting sending the sensing signal, a primary sensing network element capability, and a scheduling capability of the cooperative sensing. The primary sensing network element capability means that the sensing network element has the scheduling capability of the cooperative sensing, and the scheduling capability of the cooperative sensing includes a sending/receiving resource cooperating capability, and/or a sensing time cooperating capability, and the like.

In this case, it may be determined, based on a sensing capability of the second sensing network element and/or a sensing capability of the third sensing network element, whether the second sensing network element and the third sensing network element can be used to perform the cooperative sensing.

For example, when the sensing capability of the second sensing network element supports sending the sensing signal and receiving the echo signal, and the sensing capability of the third sensing network element supports sending the sensing signal and receiving the echo signal, the cooperative sensing of the single base station acting as a transmitter and a receiver is used.

For another example, when the sensing capability of the second sensing network element supports sending the sensing signal but not supports receiving the echo signal, and the sensing capability of the third sensing network element supports receiving the echo signal but not supports sending the sensing signal, the cooperative sensing of the different base stations acting as a transmitter and a receiver is used.

For still another example, when the sensing capability of the second sensing network element supports sending the sensing signal and receiving the echo signal, and the sensing capability of the third sensing network element supports receiving the echo signal but not supports sending the sensing signal, the cooperative sensing of the one base station acting as a transmitter and multiple base stations acting as receivers is used.

For yet another example, when the sensing capability of the second sensing network element supports sending the sensing signal and receiving the echo signal, and the sensing capability of the third sensing network element supports sending the sensing signal but does not support receiving the echo signal, the cooperative sensing of the multiple base stations acting as transmitters and one base station acting as a receiver is used.

Optionally, the cooperative sensing may be determined based on the sensing capability information of the second sensing network element or the sensing capability information of the at least one third sensing network element.

For example, the cooperative sensing is determined based on the sensing capability information of the third sensing network element. For example, it is assumed by default that the sensing capability of the second sensing network element supports sending the sensing signal and receiving the echo signal. If the sensing capability of the third sensing network element supports sending the sensing signal and receiving the echo signal, the cooperative sensing of the single base station acting as a transmitter and a receiver is used. For another example, it is assumed by default that the sensing capability of the second sensing network element supports sending the sensing signal and receiving the echo signal (where first operation mode information may indicate that the second sensing network element sends the sensing signal and does not receive the echo signal, for details, refer to the following descriptions of the first operation mode information). If the sensing capability of the third sensing network element supports receiving the echo signal but does not support sending the sensing signal, the cooperative sensing of the different base stations acting as a transmitter and a receiver is used. Details are not described herein.

It should be noted that, for ease of description, in embodiments of this application, "support sending the sensing signal and receiving the echo signal" is referred to as "support full-duplex", "support sending the sensing signal but not support receiving the echo signal" is referred to as "support a sending capability", and "support receiving the echo signal but not support sending the sensing signal" is referred to as "support a receiving capability".

In some embodiments, the first sensing resource information may include sensing resource information of the second sensing network element and/or sensing resource information of the at least one third sensing network element. The sensing resource information may indicate a resource for sending the sensing signal.

For example, the sensing resource information may indicate the resource that can be used to send the sensing signal, or the sensing resource information may indicate whether a current resource can be used to send the sensing signal. The resource that can be used to send the sensing signal is a specific communication resource that can be used to send the sensing signal, and may be a time domain length, a bandwidth size, or the like. In this case, the first sensing network element may determine, based on the sensing resource information, whether to use the cooperative sensing, for example, determine whether to indicate that the second sensing network element and the at least one third sensing network element perform the cooperative sensing.

For example, the sensing resource information may include an index of a time domain start symbol for sending the sensing signal, a quantity of symbols, an index of a symbol occupied in time domain, an index of a start resource block occupied in frequency domain, a resource block length or a frequency domain resource density, and/or the like.

For example, when the sensing resource information of the second sensing network element indicates that the current resource can be used to send the sensing signal, and the sensing resource information of the third sensing network element indicates that the current resource can be used to send the sensing signal, the cooperative sensing of the single base station acting as a transmitter and a receiver may be used.

For another example, when the sensing resource information of the second sensing network element indicates that the current resource can be used to send the sensing signal, the cooperative sensing of the different base stations acting as a transmitter and a receiver may be used, and the current resource of the third sensing network element may not be considered.

For still another example, when the sensing resource information of the second sensing network element indicates that the current resource can be used to send the sensing signal, the cooperative sensing of the one base station acting as a transmitter and multiple base stations acting as receivers may be used, and the current resource of the third sensing network element may not be considered.

For yet another example, when the sensing resource information of the second sensing network element indicates that the current resource can be used to send the sensing signal, and the sensing resource information of the third sensing network element indicates that the current resource can be used to send the sensing signal, the cooperative sensing of the multiple base stations acting as transmitters and one base station acting as a receiver may be used.

Optionally, the first sensing network element may directly receive the sensing capability information and/or the sensing resource information from the second sensing network element. Alternatively, the second sensing network element sends the sensing capability information and/or the sensing resource information to the AMF network element, and the AMF network element forwards the information to the first sensing network element.

It should be noted that the first sensing network element may receive the sensing capability information and/or sensing resource information of the third sensing network element in a similar manner. Details are not described herein.

In a possible design manner, the communication method shown in FIG. 5 may further include S507: The second sensing network element sends the sensing capability information and/or the sensing resource information to the first sensing network element. Correspondingly, the first sensing network element receives the sensing capability information and/or the sensing resource information from the second sensing network element.

In a possible design manner, the communication method shown in FIG. 5 may further include S508: The first sensing network element receives the sensing capability information and/or the sensing resource information from the at least one third sensing network element. Correspondingly, the third sensing network element sends the sensing capability information and/or the sensing resource information to the first sensing network element.

In some embodiments, the sensing result information may include whether sensing data obtained in a single-station sensing mode meets the service requirement.

For example, if the object recognition accuracy is low or the sensing object recognition false alarm rate is high when the accuracy or the rate is calculated by the first sensing network element by using the sensing data obtained in the single-station sensing mode, the service requirement is not met. In this case, the first sensing network element determines to use the cooperative sensing. Alternatively, a sensing result calculated by the first network element by using the sensing data obtained by the first sensing network element does not meet the service requirement (where for example, the object recognition accuracy is low, or the object recognition false alarm rate is high), information indicating that the sensing result does not meet the service requirement is notified to the first sensing network element. In this case, the first sensing network element determines to use the cooperative sensing.

In a possible design manner, the communication method shown in FIG. 5 may further include: The first sensing network element obtains the sensing data in the single-station sensing mode. For a specific implementation, refer to FIG. 3. Details are not described herein again. In this way, the first sensing network element or the first network element may obtain the sensing result information.

It should be noted that the first sensing network element may determine, based on two or more of the sensing service information, the first indication information, the sensing result information, the first capability information, and the first sensing resource information, an implementation in which the first sensing service uses the cooperative sensing. The foregoing specific implementations may be combined. Details are not described herein.

S502: The first sensing network element sends a first request message to the second sensing network element. Correspondingly, the second sensing network element receives the first request message from the first sensing network element.

Optionally, the first sensing network element may send the first request message to the second sensing network element via the AMF network element.

For example, the first request message may be used to request the second sensing network element to perform sensing, the first request message may include first sensing mode information, and the first sensing mode information indicates the cooperative sensing. In this case, the second sensing network element may perform the cooperative sensing based on the first sensing mode information. Correspondingly, the first sensing network element may send the first sensing mode information to the second sensing network element via the AMF network element.

In some embodiments, the first sensing mode information may include the first operation mode information, and the first operation mode information may indicate an operation mode of the second sensing network element.

Optionally, the first sensing mode information may be equivalently replaced with the first operation mode information, and the first request message includes the first operation mode information.

In some embodiments, the first operation mode information may include sending the sensing signal and receiving the echo signal, sending the sensing signal and not receiving the echo signal, or receiving the echo signal and not sending the sensing signal. Optionally, the sending the sensing signal and receiving the echo signal may include: sending the sensing signal and receiving the echo signal corresponding to the sent sensing signal, or sending the sensing signal and receiving the echo signal corresponding to the sent sensing signal and an echo signal corresponding to a sensing signal sent by another sensing network element.

It should be noted that "sending the sensing signal and receiving the echo signal corresponding to the sent sensing signal" may be referred to as "self-sending and self-receiving", "sending the sensing signal and not receiving the echo signal" may be referred to as "sending only", "receiving the echo signal and not sending the sensing signal" may be referred to as "receiving only", and "sending the sensing signal and receiving an echo signal corresponding to a sensing signal sent by another sensing network element" may be referred to as "self-sending, self-receiving, and receiving others". Optionally, "self-sending, self-receiving, and receiving others " may be implemented by using two pieces of information: "self-sending and self-receiving" and "receiving only". In other words, the first operation mode information includes "self-sending and self-receiving" and "receiving only".

For example, with reference to FIG. 4, the self-sending and self-receiving may refer to operation modes of the second sensing network element 1 and the second sensing network element 2 in the single base station acting as a transmitter and a receiver shown in (a) in FIG. 4; the sending only may refer to the operation mode of the second sensing network element 1 in the different base stations acting as a transmitter and a receiver shown in (b) in FIG. 4; the receiving only may refer to the operation mode of the second sensing network element 2 in the different base stations acting as a transmitter and a receiver shown in (b) in FIG. 4 or the operation mode of the second sensing network element 2 in the different base stations acting as a transmitter and a receiver shown in (c) in FIG. 4; and the self-sending, self-receiving, and receiving others may refer to the operation mode of the second sensing network element 1 in the one base station acting as a transmitter and multiple base stations acting as receivers shown in (d) in FIG. 4. The sending refers to sending of the sensing signal, and the receiving refers to receiving of the echo signal.

Optionally, a part of echo signals corresponding to the sensing signal sent by the second sensing network element 1 in the one base station acting as a transmitter and multiple base stations acting as receivers shown in (c) in FIG. 4 may be received by the second sensing network element 2. Therefore, the operation mode of the second sensing network element 1 in the one base station acting as a transmitter and multiple base stations acting as receivers shown in (c) in FIG. 4 may be referred to as the self-sending, self-receiving, and receiving others. Optionally, "self-sending, self-receiving, and receiving others " may be implemented by using two pieces of information: "self-sending and self-receiving" and "sending only". In other words, the first operation mode information includes "self-sending and self-receiving" and "sending only".

For example, the first operation mode information may include an identifier of the operation mode, so that the second sensing network element may perform the sensing based on the operation mode corresponding to the identifier.

Optionally, a correspondence between the operation mode and the identifier of the operation mode may be predefined in the first sensing network element, the second sensing network element, and the at least one third sensing network element.

In a possible design manner, the communication method shown in FIG. 5 may further include: The first sensing network element determines the first operation mode information based on the cooperative sensing mode.

Optionally, the first sensing network element may further determine at least one piece of second operation mode information based on the cooperative sensing mode.

Optionally, the second operation mode information may indicate an operation mode of the third sensing network element, and the operation mode of the second sensing network element and the operation mode of the at least one third sensing network element are used to implement the cooperative sensing.

For example, assuming that the second sensing network element is a primary sensing network element, the second operation mode information may be determined by the second sensing network element based on the cooperative sensing mode, or determined by the second sensing network element based on the cooperative sensing mode and the first operation mode information.

In this case, when the first sensing network element determines that the second sensing network element is the primary sensing network element, the first operation mode information and the second operation mode information may be determined, or only the first operation mode information is determined, and the second operation mode information is determined by the second sensing network element.

For example, the cooperative sensing mode is the single base station acting as a transmitter and a receiver. With reference to FIG. 1, the operation mode of the second sensing network element may be sending the sensing signal and receiving the echo signal corresponding to the sent sensing signal, and the operation mode of the third sensing network element may be sending the sensing signal and receiving the echo signal corresponding to the sent sensing signal.

For example, the cooperative sensing mode is the different base stations acting as a transmitter and a receiver. With reference to FIG. 1, the operation mode of the second sensing network element may be sending the sensing signal and not receiving the echo signal, and the operation mode of the third sensing network element may be receiving the echo signal and not sending the sensing signal. This is not limited.

For example, the cooperative sensing mode is the one base station acting as a transmitter and multiple base stations acting as receivers. With reference to FIG. 1, the operation mode of the second sensing network element may be sending the sensing signal and receiving the echo signal corresponding to the sent sensing signal, and the operation mode of the third sensing network element may be receiving the echo signal and not sending the sensing signal, for example, receiving the echo signal corresponding to the sensing signal sent by the second sensing network element. This is not limited.

For example, the cooperative sensing mode is the multiple base stations acting as transmitters and one base station acting as a receiver. With reference to FIG. 1, the operation mode of the second sensing network element may be sending the sensing signal and receiving all echo signals, for example, receiving the echo signal corresponding to the sensing signal sent by the second sensing network element and the echo signal corresponding to the sensing signal sent by the third sensing network element, and the operation mode of the third sensing network element may be sending the sensing signal and not receiving the echo signal. This is not limited.

In some embodiments, the second operation mode information includes sending the sensing signal and receiving the echo signal, sending the sensing signal and not receiving the echo signal, or receiving the echo signal and not sending the sensing signal. For descriptions of sending the sensing signal and receiving the echo signal, sending the sensing signal and not receiving the echo signal, or receiving the echo signal and not sending the sensing signal, refer to the first operation mode information. Details are not described herein again.

In a possible design manner, that the first sensing network element determines the first operation mode information based on the cooperative sensing mode may include: The first sensing network element determines the first operation mode information based on the cooperative sensing mode and at least one of the first capability information and the first sensing resource information. Optionally, at least one piece of second operation mode information may be further determined.

For example, the first sensing network element may determine, based on the cooperative sensing mode and at least one of sensing capability information and sensing resource information of at least two sensing network elements, at least two sensing network elements (optional) that need to perform the cooperative sensing and an operation mode of each sensing network element. Alternatively, the first sensing network element may determine a sensing network element (for example, the second sensing network element) (optional) that needs to perform the cooperative sensing and an operation mode of the sensing network element. The second sensing network element determines at least one third sensing network element (optional) that cooperates with the second sensing network element and an operation mode of each third sensing network element.

For example, the first sensing network element determines the first operation mode information and the at least one piece of second operation mode information based on the cooperative sensing mode and the first capability information. The first capability information includes that a sensing network element 1 supports the full-duplex, a sensing network element 2 supports the sending capability, a sensing network element 3 supports the full-duplex, and a sensing network element 4 supports the receiving capability.

If it is assumed that the cooperative sensing mode is the single base station acting as a transmitter and a receiver, with reference to the first capability information, the first operation mode information may indicate that the sensing network element 1 sends a sensing signal and receives an echo signal corresponding to the sent sensing signal, and the second operation mode information may indicate that the sensing network element 3 sends a sensing signal and receives an echo signal corresponding to the sent sensing signal. In this way, the sensing network element 1 and the sensing network element 3 implement the single base station acting as a transmitter and a receiver by using respective operation modes.

If it is assumed that the cooperative sensing mode is the different base stations acting as a transmitter and a receiver, with reference to the first capability information, the first operation mode information may indicate that the sensing network element 2 sends a sensing signal and does not receive an echo signal, and the second operation mode information may indicate that the sensing network element 4 receives an echo signal and does not send a sensing signal. In this way, the sensing network element 2 and the sensing network element 4 implement the different base stations acting as a transmitter and a receiver by using respective operation modes. Optionally, the sensing network element 2 may be replaced with the sensing network element 1 or the sensing network element 3, the sensing network element 4 may be replaced with the sensing network element 1 or the sensing network element 3, or the sensing network element 1 and/or the sensing network element 3 may be further included, so that the different base stations acting as a transmitter and a receiver may be implemented. Details are not described.

If it is assumed that the cooperative sensing mode is the one base station acting as a transmitter and multiple base stations acting as receivers, with reference to the first capability information, the first operation mode information may indicate that the sensing network element 1 sends a sensing signal and receives an echo signal corresponding to the sent sensing signal, and the second operation mode information may indicate that the sensing network element 4 receives an echo signal corresponding to the sensing signal sent by the sensing network element 1 and does not send a sensing signal. In this way, the sensing network element 1 and the sensing network element 4 implement the one base station acting as a transmitter and multiple base stations acting as receivers by using respective operation modes. Optionally, the sensing network element 1 may be replaced with the sensing network element 3, or the sensing network element 3 may be further included. Operation mode information of the sensing network element 3 indicates that the sensing network element 3 sends a sensing signal and receives an echo signal corresponding to the sent sensing signal, and the second operation mode information may further indicate that the sensing network element 4 receives an echo signal corresponding to a sensing signal sent by the sensing network element 3.

If it is assumed that the cooperative sensing mode is the multiple base stations acting as transmitters and one base station acting as a receiver, with reference to the first capability information, the first operation mode information may indicate that the sensing network element 1 sends a sensing signal and receives all echo signals, and the second operation mode information may indicate that the sensing network element 2 sends a sensing signal and does not receive an echo signal. In this way, the sensing network element 1 and the sensing network element 2 implement the multiple base stations acting as transmitters and one base station acting as a receiver by using respective operation modes. Optionally, the sensing network element 1 may be replaced with the sensing network element 3, or the sensing network element 3 may be further included. The operation mode information of the sensing network element 3 indicates that the sensing network element 3 sends a sensing signal and does not receive an echo signal. Examples are not described one by one.

Optionally, the cooperative sensing mode is not limited in this application, and may be a mode other than the single base station acting as a transmitter and a receiver, the different base stations acting as a transmitter and a receiver, the one base station acting as a transmitter and multiple base stations acting as receivers, or the multi-sending single-receiving, provided that the cooperative sensing can be implemented. In this case, at least two sensing network elements in the sensing network element 1 to the sensing network element 4 and corresponding operation modes may be determined, provided that the cooperative sensing can be performed.

For example, the first sensing network element determines the first operation mode information and the at least one piece of second operation mode information based on the cooperative sensing mode and the first sensing resource information. The first sensing resource information includes that a resource of the sensing network element 1 can be used to send the sensing signal, a resource of the sensing network element 2 cannot be used to send the sensing signal, a resource of the sensing network element 3 can be used to send the sensing signal, and a resource of the sensing network element 4 cannot be used to send the sensing signal.

If it is assumed that the cooperative sensing mode is the single base station acting as a transmitter and a receiver, with reference to the first sensing resource information, the first operation mode information may indicate that the sensing network element 1 sends the sensing signal and receives the echo signal corresponding to the sent sensing signal, and the second operation mode information may indicate that the sensing network element 3 sends the sensing signal and receives the echo signal corresponding to the sent sensing signal.

If it is assumed that the cooperative sensing mode is the different base stations acting as a transmitter and a receiver, with reference to the first sensing resource information, the first operation mode information may indicate that the sensing network element 1 and/or the sensing network element 3 send/sends the sensing signal/the sensing signal and do/does not receive an echo signal. There is no requirement on a resource of a sensing network element that cooperates with the sensing network element 1 and/or the sensing network element 3. For example, it may be indicated that any one or more of the sensing network element 1 to the sensing network element 4 receive the echo signals and do not send a sensing signal, provided that a sensing network element that sends the sensing signal and does not receive the echo signal is different from a sensing network element that receives the echo signal and does not send the sensing signal.

When the cooperative sensing mode is the one base station acting as a transmitter and multiple base stations acting as receivers, the multiple base stations acting as transmitters and one base station acting as a receiver, or another mode, for a specific implementation of determining the first operation mode information and the at least one piece of second operation mode information based on the cooperative sensing mode and the first sensing resource information, details are not described herein again, provided that a resource of a sensing network element that sends the sensing signal can be used to send the sensing signal, and a resource for receiving the sensing signal may not be limited.

For example, the first sensing network element determines the first operation mode information and the at least one piece of second operation mode information based on the cooperative sensing mode, the first capability information, and the first sensing resource information. The first capability information includes that the sensing network element 1 supports the full-duplex, the sensing network element 2 supports the sending capability, the sensing network element 3 supports the full-duplex, and the sensing network element 4 supports the receiving capability. The first sensing resource information includes that the resource of the sensing network element 1 can be used to send the sensing signal, the resource of the sensing network element 2 cannot be used to send the sensing signal, the resource of the sensing network element 3 cannot be used to send the sensing signal, and the resource of the sensing network element 4 can be used to send the sensing signal.

If it is assumed that the cooperative sensing mode is the different base stations acting as a transmitter and a receiver, with reference to the first capability information and the first sensing resource information, although the sensing network element 2 and the sensing network element 3 each have the sending capability but the resources cannot be used to send the sensing signal, and the resource of the sensing network element 4 can be used to send the sensing signal but the sensing network element 4 does not support the sending capability, the first operation mode information may indicate that the sensing network element 1 sends the sensing signal but does not receive the echo signal, and there is no requirement on the resource of a sensing network element cooperating with the sensing network element 1. For example, it may be indicated that any one or more of the sensing network element 2, the sensing network element 3, and the sensing network element 4 receive the echo signals and do not send the sensing signal.

When the cooperative sensing mode is the single base station acting as a transmitter and a receiver, one base station acting as a transmitter and multiple base stations acting as receivers, multi-sending single-receiving, or another mode, for a specific implementation of determining the first operation mode information and the at least one piece of second operation mode information based on the cooperative sensing mode, the first capability information, and the first sensing resource information, refer to the implementation performed when the cooperative sensing is the different base stations acting as a transmitter and a receiver. Details are not described herein again.

In some embodiments, the first sensing network element may determine, based on the first sensing area in the service requirement of the first sensing service, at least two sensing network elements that need to perform the cooperative sensing. For example, the first sensing area is the same as sensing areas of the second sensing network element and the third sensing network element. Alternatively, both the sensing area of the second sensing network element and the sensing area of the third sensing network element include the first sensing area. In this case, a second cooperative sensing network element and the third sensing network element are used as sensing network elements that will perform the cooperative sensing.

It should be noted that the at least two sensing network elements (namely, the second sensing network element and the third sensing network element) that need to perform the cooperative sensing may be determined before the first operation mode information and the second operation mode information are determined.

In a possible design manner, the first request message may further include one or more of the following: data indication information, first sensing control information, sensing time information, sensing bandwidth information, identification information of the at least one third sensing network element, first primary-secondary indication information, and address information.

Optionally, the data indication information may indicate that the sensing data carries a time stamp or a sequence number. In this case, after obtaining the sensing data, the second sensing network element sends the time stamp or the sequence number together with the sensing data to the first sensing network element, so that the first sensing network element performs fusion processing on sensing data sent by different sensing network elements (for example, the second sensing network element and the third sensing network element).

For example, the data indication information may indicate that multi-path sensing data carries time stamps or sequence numbers. With reference to (d) in FIG. 4, the second sensing network element 1 may include a time stamp or a sequence number in each piece of sensing data generated based on the echo signal corresponding to the sensing signal sent by the second sensing network element 1 and sensing data generated based on the echo signal corresponding to the sensing signal sent by the second sensing network element 2, so that the first sensing network element performs the fusion processing on the sensing data sent by the different sensing network elements (for example, the second sensing network element and the third sensing network element), for example, performs the fusion processing on sensing data that has a same time stamp or sequence number.

Optionally, the first sensing control information may include one or more of the following: a second sensing distance, a second sensing area, a second sensing speed range, a second sensing distance resolution, second sensing angle measurement precision, a second sensing speed resolution, a second sensing QoS requirement, a second sensing location point, a second sensing terminal device identifier, second sensing time information, second sensing object recognition accuracy, a second sensing object recognition false alarm rate, second sensing data precision, a second sensing data update frequency, a second sensing dimension indication, and a second sensing feedback manner. In this case, the second sensing network element may perform the sensing based on the first sensing control information.

For example, the first sensing control information may be determined based on the service type and/or the service requirement of the first sensing service.

For the different base stations acting as a transmitter and a receiver and the one base station acting as a transmitter and multiple base stations acting as receivers, one piece of sensing control information, for example, the first sensing control information, may be determined, and sent to the second sensing network element.

For the one base station acting as a transmitter and multiple base stations acting as receivers and the multiple base stations acting as transmitters and one base station acting as a receiver, sensing control information, for example, the first sensing control information and second sensing control information, may be determined respectively for the second sensing network element and the third sensing network element, and respectively sent to the second sensing network element by using the first request message and sent to the third sensing network element by using a second request message.

In some embodiments, the first sensing network element may determine the first sensing control information and the second sensing control information based on the service type and/or the service requirement of the first sensing service. In this case, the second sensing network element may perform the sensing based on the first sensing control information, and the third sensing network element may perform the sensing based on the second sensing control information.

Optionally, the second sensing control information may include one or more of the following: a third sensing distance, a third sensing area, a third sensing speed range, a third sensing distance resolution, third sensing angle measurement precision, a third sensing speed resolution, a third sensing QoS requirement, a third sensing location point, a third sensing terminal device identifier, third sensing time information, third sensing object recognition accuracy, a third sensing object recognition false alarm rate, third sensing data precision, a third sensing data update frequency, a third sensing dimension indication, and a third sensing feedback manner.

For example, the sensing object recognition accuracy in each piece of the first sensing control information and the second sensing control information is determined based on the first sensing object recognition accuracy in the service requirement of the first sensing service. For example, assuming that the first sensing object recognition accuracy is 95%, both the second sensing object recognition accuracy and the third sensing object recognition accuracy may be 90%. Details are not described in this application.

Optionally, the sensing time information includes one or more of the following: sensing duration, a sensing periodicity, and start and end sensing time points.

In this case, the second sensing network element may perform the sensing based on the sensing time information. For example, when the operation mode of the second sensing network element is "sending only", the second sensing network element may determine, based on the sensing time information, a time point for sending the sensing signal. For another example, when the operation mode of the second sensing network element is "receiving only", the second sensing network element may determine, based on the sensing time information, a time point for receiving the sensing signal.

For example, the sensing time information may be determined based on one or more of the following: the service type of the first sensing service, the first sensing QoS requirement, the first sensing data update frequency, the second sensing QoS requirement, the second sensing data precision, and the second sensing data update frequency.

For example, the first sensing network element may obtain the sensing time information from the first network element by using the third request message.

Optionally, the sensing bandwidth information is used to determine bandwidth for sending and/or receiving the sensing signal.

In this case, the second sensing network element may determine, based on the sensing bandwidth information and when sending the sensing signal, the bandwidth for sending the sensing signal, and may determine, based on the sensing bandwidth information and when receiving the sensing signal, the bandwidth for receiving the sensing signal.

Optionally, the second sensing network element receives the identification information of the at least one third sensing network element, and may collaborate with the at least one third sensing network element by using the identification information of the at least one third sensing network element.

For example, the second sensing network element negotiates the sensing time information and/or the sensing bandwidth information with the third sensing network element.

Optionally, the first primary-secondary indication information may indicate that the second sensing network element is a primary sensing network element or a secondary sensing network element.

For example, the first sensing network element may determine the first primary-secondary indication information based on the sensing capability information of the second sensing network element. For example, if the sensing capability information of the second sensing network element indicates that the second sensing network element has the primary sensing network element capability and/or the scheduling capability of the cooperative sensing, the first primary-secondary indication information indicates that the second sensing network element is the primary sensing network element, and otherwise, the second sensing network element is the secondary sensing network element.

Alternatively, for example, the first sensing network element may determine the first primary-secondary indication information and second primary-secondary indication information based on the sensing capability information of the second sensing network element and the sensing capability information of the at least one third sensing network element. The second primary-secondary indication information may indicate that the third sensing network element is a primary sensing network element or a secondary sensing network element.

For example, the sensing capability information of the second sensing network element indicates that the second sensing network element has the primary sensing network element capability and/or the scheduling capability of the cooperative sensing, and the sensing capability information of the third sensing network element indicates that the third sensing network element does not have the primary sensing network element capability and the scheduling capability of the cooperative sensing. In this case, the first primary-secondary indication information indicates that the second sensing network element is the primary sensing network element, and the second primary-secondary indication information indicates that the third sensing network element is the secondary sensing network element.

Optionally, the address information indicates an address for sending the sensing data or a destination address. For example, for the second sensing network element, the address information indicates an address of the first sensing network element, an address of the server of the first sensing service, or an address of a sensing network element cooperating with the second sensing network element, for example, an address of the third sensing network element. The address information may be an IP address, a tunnel endpoint identifier (tunnel endpoint identifier, TEID), a fully qualified domain name (fully qualified domain name, FQDN), or the like. In this case, the second sensing network element may send the sensing data to the address of the first sensing network element, may send the sensing data to the address of the server of the first sensing service, or may send the sensing data to the address of the third sensing network element, and the third sensing network element sends the sensing data to the first sensing network element.

S503: The first sensing network element sends the second request message to the at least one third sensing network element. Correspondingly, the third sensing network element receives the second request message from the first sensing network element.

It should be noted that a sequence of S503 and S502 is not limited in this embodiment of this application.

Optionally, the first sensing network element may send the second request message to the at least one third sensing network element via the AMF network element.

Optionally, the second request message may be used to request the at least one third sensing network element to perform the sensing, the second request message may include second sensing mode information, and the second sensing mode information may indicate the cooperative sensing. In this case, the third sensing network element may perform the cooperative sensing based on the second sensing mode information. Correspondingly, the first sensing network element may send the second sensing mode information to the at least one third sensing network element via the AMF network element.

In some embodiments, the second sensing mode information may include the second operation mode information, and the second operation mode information may indicate the operation mode of the third sensing network element. For a specific implementation of the second operation mode information, refer to S502. Details are not described herein again.

Optionally, the second sensing mode information may be equivalently replaced with the second operation mode information, and the second request message includes the second operation mode information.

Optionally, the second operation mode information may be determined by the first sensing network element and sent to the third sensing network element. For a specific implementation, refer to the corresponding implementation in S502. Details are not described herein again.

In a possible design manner, the second request message may further include one or more of the following: the data indication information, the second sensing control information, the sensing time information, the sensing bandwidth information, identification information of the second sensing network element, and the second primary-secondary indication information.

For specific implementations of the data indication information, the second sensing control information, the sensing time information, the sensing bandwidth information, and the second primary-secondary indication information, refer to S502. Details are not described herein again.

Optionally, the third sensing network element receives the identification information of the second sensing network element, and may cooperate with the second sensing network element by using the identification information of the second sensing network element.

Optionally, the sensing time information and/or the sensing bandwidth information may be received by the third sensing network element from the first sensing network element or from the second sensing network element.

In a possible design manner, the communication method shown in FIG. 5 may further include: The second sensing network element sends the sensing time information and/or the sensing bandwidth information to the at least one third sensing network element. Correspondingly, the third sensing network element receives the sensing time information and/or the sensing bandwidth information from the second sensing network element.

In other words, the second sensing network element may determine the sensing time information and/or the sensing bandwidth information, and send the sensing time information and/or the sensing bandwidth information to the third sensing network element.

In some embodiments, that the second sensing network element sends the sensing time information and/or the sensing bandwidth information to the at least one third sensing network element may include: The second sensing network element sends the sensing time information and/or the sensing bandwidth information to the third sensing network element based on the identification information of the at least one third sensing network element.

To be specific, the second sensing network element may learn, based on the identification information of the at least one third sensing network element, of a sensing network element that cooperates with the second sensing network element, and send the sensing time information and/or the sensing bandwidth information, so that the second sensing network element can cooperate with the at least one third sensing network element, and may perform the sensing in the cooperative sensing mode, to improve sensing accuracy.

In some embodiments, that the second sensing network element sends the sensing time information and/or the sensing bandwidth information to the third sensing network element based on the identification information of the at least one third sensing network element includes: When the first primary-secondary indication information indicates that the second sensing network element is the primary sensing network element, the second sensing network element sends the sensing time information and/or the sensing bandwidth information to the third sensing network element based on the identification information of the at least one third sensing network element.

Optionally, when the second sensing network element is the primary sensing network element, the second sensing network element determines the sensing time information and/or the sensing bandwidth information, and sends the sensing time information and/or the sensing bandwidth information to a secondary sensing network element cooperating with the second sensing network element.

In some embodiments, that the third sensing network element receives the sensing time information and/or the sensing bandwidth information from the second sensing network element includes: When the second primary-secondary indication information indicates that the third sensing network element is the secondary sensing network element, the third sensing network element receives the sensing time information and/or the sensing bandwidth information from the second sensing network element.

In other words, when the third sensing network element is the secondary sensing network element, the third sensing network element may receive the sensing time information and/or the sensing bandwidth information from the second sensing network element.

S504: The second sensing network element performs the sensing based on the first sensing mode information.

For example, if the first sensing mode information includes the first operation mode information, the second sensing network element may perform the sensing by using the operation mode indicated by the first operation mode information. For example, the second sensing network element may send the sensing signal and receive the echo signal, send the sensing signal and not receive the echo signal, or receive the echo signal and not send the sensing signal.

In a possible design manner, S504 may include: The second sensing network element performs the sensing based on the first sensing mode information and one or more of the sensing time information, the sensing bandwidth information, and the first sensing control information.

In a possible design manner, the communication method shown in FIG. 5 may further include: The second sensing network element sends the sensing data based on the data indication information and/or the address information.

For example, after receiving the echo signal to obtain the sensing data, the second sensing network element sends the time stamp or the sequence number together with the sensing data to the first sensing network element, and sends the time stamp or the sequence number and the sensing data to the address indicated by the address indication information. For example, the second sensing network element may send the sensing data to the address of the first sensing network element, or may send the sensing data to the address of the third sensing network element, the third sensing network element sends the sensing data to the first sensing network element, and the first sensing network element receives the sensing data and provides a sensing service.

S505: The third sensing network element performs the sensing based on the second sensing mode information.

For example, if the second sensing mode information may include the second operation mode information, the third sensing network element may perform the sensing by using the operation mode indicated by the second operation mode information. For example, the third sensing network element may send the sensing signal and receive the echo signal, send the sensing signal and not receive the echo signal, or receive the echo signal and not send the sensing signal.

In a possible design manner, S505 may include: The third sensing network element performs the sensing based on the second sensing mode information and one or more of the sensing time information, the sensing bandwidth information, and the first sensing control information.

In a possible design manner, the communication method shown in FIG. 5 may further include: The third sensing network element sends the sensing data based on the data indication information and/or the address information.

For example, after receiving the echo signal to obtain the sensing data, the third sensing network element sends the time stamp or the sequence number together with the sensing data to the address indicated by the address indication information. For example, the third sensing network element may send the sensing data to the address of the first sensing network element, or may send the sensing data to the address of the second sensing network element, the second sensing network element sends the sensing data to the first sensing network element, and the first sensing network element receives the sensing data and provides a sensing service.

Optionally, in steps S504 and S505, in a process in which the second sensing network element and the third sensing network element complete the cooperative sensing, the sensing time information, the sensing bandwidth information, and/or the like may further be negotiated and exchanged through an Xn interface.

Optionally, the communication method shown in FIG. 5 may further include: The first sensing network element receives the sensing data from the second sensing network element and/or receives the sensing data from the at least one third sensing network element, and provides the first sensing service for the first network element based on the received sensing data. For example, the first sensing network element may further perform the fusion processing on the sensing data from the second sensing network element and the sensing data from the at least one third sensing network element based on the time stamps or the sequence numbers of the sensing data. For example, the first sensing network element performs the fusion processing on sensing data that has a same time stamp or sequence number.

Based on the communication method shown in FIG. 5, the first sensing network element determines that the first sensing service uses the cooperative sensing, and sends, to each of the second sensing network element and the at least one third sensing network element, the request message for requesting sensing. The request message includes the sensing mode information indicating the cooperative sensing. The second sensing network element performs the sensing based on the indicated cooperative sensing, and the at least one third sensing network element performs the sensing based on the indicated cooperative sensing, so that the sensing can be performed in the cooperative sensing mode, to improve sensing accuracy.

For example, FIG. 6 is a schematic flowchart of another communication method according to an embodiment of this application.

As shown in FIG. 6, the communication method includes the following steps.

S601: A second sensing network element determines that a first sensing service uses cooperative sensing.

In a possible design manner, S601 may include: The second sensing network element determines, based on one or more of sensing service information, first capability information, and first sensing resource information, that the first sensing service uses the cooperative sensing. For a specific implementation, refer to the specific implementation in which a first sensing network element determines, based on one or more of sensing service information, first capability information, and first sensing resource information, that a first sensing service uses cooperative sensing in S501. A main difference lies in that the first sensing network element is replaced with the second sensing network element.

For example, the cooperative sensing may refer to cooperative sensing or single-station sensing, or the cooperative sensing may refer to a specific mode of the cooperative sensing, for example, a single base station acting as a transmitter and a receiver, different base stations acting as a transmitter and a receiver, one base station acting as a transmitter and multiple base stations acting as receivers, or multiple base stations acting as transmitters and one base station acting as a receiver.

Optionally, the sensing service information may further include one or more of the following: a correspondence between a service type of the first sensing service and the cooperative sensing, and a correspondence between a service requirement of the first sensing service and the cooperative sensing.

Optionally, the correspondence between the service type of the first sensing service and the cooperative sensing, and/or the correspondence between the service requirement of the first sensing service and the cooperative sensing may be preconfigured in the second sensing network element, or received by the second sensing network element from the first sensing network element.

For specific implementations of the sensing service information, the first capability information, and the first sensing resource information, refer to S501. Details are not described herein again.

In some embodiments, the first capability information may include only sensing capability information of the second sensing network element, and the first sensing resource information may include only sensing resource information of the second sensing network element.

In this case, the second sensing network element may determine the cooperative sensing or the single-station sensing based on one or more of the sensing service information, the sensing capability information of the second sensing network element, and the sensing resource information of the second sensing network element. Optionally, if the cooperative sensing is used, the specific cooperative sensing mode is determined with reference to sensing capability information of at least one third sensing network element and/or sensing resource information of the at least one third sensing network element.

For example, a sensing capability of the second sensing network element supports sending a sensing signal and receiving an echo signal, and usage of the cooperative sensing has been determined. If the sensing capability information of the third sensing network element indicates that the third sensing network element supports sending a sensing signal and receiving an echo signal, the cooperative sensing of the single base station acting as a transmitter and a receiver is used. If the sensing capability information of the third sensing network element indicates that the third sensing network element supports receiving the echo signal but does not support sending the sensing signal, the cooperative sensing of the different base stations acting as a transmitter and a receiver or the one base station acting as a transmitter and multiple base stations acting as receivers is used. If the sensing capability information of the third sensing network element indicates that the third sensing network element supports sending the sensing signal but does not support receiving the echo signal, the cooperative sensing of the one base station acting as a transmitter and multiple base stations acting as receivers is used.

For example, the sensing resource information of the second sensing network element indicates that a current resource can be used to send the sensing signal, and usage of the cooperative sensing has been determined. If the sensing resource information of the third sensing network element indicates that a current resource cannot be used to send the sensing signal, the cooperative sensing of the different base stations acting as a transmitter and a receiver or the one base station acting as a transmitter and multiple base stations acting as receivers may be used. If the sensing resource information of the third sensing network element indicates that the current resource can be used to send the sensing signal, the cooperative sensing of the single base station acting as a transmitter and a receiver, the one base station acting as a transmitter and multiple base stations acting as receivers, the one base station acting as a transmitter and multiple base stations acting as receivers, or the multiple base stations acting as transmitters and one base station acting as a receiver may be used.

For example, the sensing capability of the second sensing network element supports sending the sensing signal and receiving the echo signal, the sensing resource information of the second sensing network element indicates that the current resource can be used to send the sensing signal, and usage of the cooperative sensing has been determined. If the sensing capability information of the third sensing network element indicates that the third sensing network element supports sending the sensing signal and receiving the echo signal, and the sensing resource information of the third sensing network element indicates that the current resource can be used to send the sensing signal, the cooperative sensing of the single base station acting as a transmitter and a receiver is used. If the sensing capability information of the third sensing network element indicates that the third sensing network element supports receiving the echo signal but does not support sending the sensing signal, and the sensing resource information of the third sensing network element indicates that the current resource cannot be used to send the sensing signal, the cooperative sensing of the different base stations acting as a transmitter and a receiver or the one base station acting as a transmitter and multiple base stations acting as receivers is used. If the sensing capability information of the third sensing network element indicates that the third sensing network element supports sending the sensing signal but does not support receiving the echo signal, and the sensing resource information of the third sensing network element indicates that the current resource can be used to send the sensing signal, the cooperative sensing of the one base station acting as a transmitter and multiple base stations acting as receivers is used.

In some embodiments, S601 may further include: The second sensing network element determines, based on first sensing control information, that the first sensing service uses the cooperative sensing. For specific content in the first sensing control information, refer to S502. For example, there is a correspondence between the cooperative sensing and a service requirement (for example, a second sensing QoS requirement, second sensing object recognition accuracy, and a second sensing object recognition false alarm rate) in the first sending control information. The correspondence may be preconfigured in the second sensing network element.

Optionally, the sensing service information may be further included in first sensing control information.

In a possible design manner, the communication method shown in FIG. 6 may further include S605: The third sensing network element sends the sensing capability information and/or the sensing resource information to the second sensing network element. Correspondingly, the second sensing network element receives the sensing capability information and/or the sensing resource information from the at least one third sensing network element.

In a possible design manner, the communication method shown in FIG. 6 may further include S606: The second sensing network element sends the sensing capability information and/or the sensing resource information to the at least one third sensing network element. Correspondingly, the third sensing network element receives the sensing capability information and/or the sensing resource information from the second sensing network element.

It should be noted that a sequence of S606 and S605 is not limited in this embodiment of this application.

In other words, the third sensing network element and the second sensing network element may exchange the sensing capability information and/or the sensing resource information, for example, through an Xn interface.

In a possible design manner, S601 may include S607: The first sensing network element sends a first request message to the second sensing network element. Correspondingly, the second sensing network element receives the first request message from the first sensing network element.

Optionally, the first request message may include first sensing mode information, and the first sensing mode information may indicate the cooperative sensing.

To be specific, in addition to determining, by the second sensing network element, whether to use the cooperative sensing, the first sensing network element may also notify the second sensing network element to use the cooperative sensing, and the second sensing network element further determines the specific cooperative sensing mode to be used, for example, the single base station acting as a transmitter and a receiver, the different base stations acting as a transmitter and a receiver, the one base station acting as a transmitter and multiple base stations acting as receivers, or the multiple base stations acting as transmitters and one base station acting as a receiver. Alternatively, the first sensing network element sends the specific cooperative sensing mode, and the second sensing network element further determines, based on the received first sensing mode information, that the first sensing service uses the cooperative sensing.

Optionally, the first sensing network element may send the first request message to the second sensing network element via an AMF network element. Correspondingly, the first sensing network element may send the first sensing mode information to the second sensing network element via the AMF network element.

In a possible design manner, the communication method shown in FIG. 6 may further include S608: The first sensing network element determines that the first sensing service uses the cooperative sensing. For a specific implementation, refer to S501. Details are not described herein again.

To be specific, the first sensing network element may determine whether to use the cooperative sensing, and the cooperative sensing determined by the first sensing network element may be the cooperative sensing or the single-station sensing at a coarse granularity, or the single base station acting as a transmitter and a receiver, the different base stations acting as a transmitter and a receiver, the one base station acting as a transmitter and multiple base stations acting as receivers, or the multiple base stations acting as transmitters and one base station acting as a receiver at a fine granularity.

In a possible design manner, the communication method shown in FIG. 6 may further include: The first sensing network element obtains sensing data in the single-station sensing mode. For a specific implementation, refer to FIG. 3. Details are not described herein again. In this way, the first sensing network element may obtain whether the sensing data obtained in the single-station sensing mode meets the service requirement, to determine whether to use the cooperative sensing.

In some embodiments, the first request message may further include one or more of the following: data indication information, the first sensing control information, sensing time information, sensing bandwidth information, first primary-secondary indication information, and address information. For a specific implementation, refer to S501. Details are not described herein again.

In some embodiments, S607 may include: The first sensing network element sends the first request message to the second sensing network element based on the sensing capability information of the second sensing network element.

For example, if the second sensing network element has a primary sensing network element capability and/or a scheduling capability of the cooperative sensing, the first sensing network element sends the first request message to the second sensing network element.

Optionally, the first sensing network element may determine the second sensing network element as the primary sensing network element based on that the second sensing network element has the primary sensing network element capability and/or the cooperative sensing scheduling capability, and send the first request message to the primary sensing network element.

Optionally, the first primary-secondary indication information may indicate that the second sensing network element is the primary sensing network element.

In a possible design manner, the communication method shown in FIG. 6 may further include S609: A first network element sends a third request message to the first sensing network element. Correspondingly, the first sensing network element receives the third request message from the first network element. Optionally, the third request message is used to request the first sensing service. Optionally, the third request message may include the sensing service information and/or first indication information. For a specific implementation, refer to S506. Details are not described herein again.

S602: The second sensing network element sends a fourth request message to the at least one third sensing network element. Correspondingly, the third sensing network element receives the fourth request message from the second sensing network element.

For example, the fourth request message may be used to request the third sensing network element to perform sensing, the fourth request message may include third sensing mode information, and the third sensing mode information indicates the cooperative sensing. In this case, the third sensing network element may perform the cooperative sensing based on the third sensing mode information.

In some embodiments, the third sensing mode information may include third operation mode information, and the third operation mode information may indicate an operation mode of the third sensing network element.

Optionally, the third sensing mode information may be equivalently replaced with the third operation mode information, and the fourth request message includes the third operation mode information.

In some embodiments, the third operation mode information includes sending a sensing signal and receiving an echo signal, sending the sensing signal and not receiving the echo signal, or receiving the echo signal and not sending the sensing signal. For definitions of sending a sensing signal and receiving an echo signal, and the operation mode, refer to S502. Details are not described herein again.

For example, the third operation mode information may include an identifier of the operation mode, so that the third sensing network element may perform the sensing based on the operation mode corresponding to the identifier.

Optionally, a correspondence between the operation mode and the identifier of the operation mode may be predefined in the first sensing network element, the second sensing network element, and the at least one third sensing network element.

In a possible design manner, the communication method shown in FIG. 6 may further include S610: The second sensing network element determines at least one piece of third operation mode information based on the cooperative sensing mode.

In a possible design manner, the communication method shown in FIG. 6 may further include: The second sensing network element determines fourth operation mode information based on the cooperative sensing mode.

It should be noted that the at least one piece of third operation mode information and the fourth operation mode information may be determined in a same step. For example, the second sensing network element determines the at least one piece of third operation mode information and the fourth operation mode information based on the cooperative sensing mode.

In some embodiments, the fourth operation mode information may indicate an operation mode of the second sensing network element, and the operation mode of the second sensing network element and the operation mode of the at least one third sensing network element are used to implement the cooperative sensing.

Optionally, the fourth operation mode information may include sending a sensing signal and receiving an echo signal, sending the sensing signal and not receiving the echo signal, or receiving the echo signal and not sending the sensing signal.

For specific implementations in which the second sensing network element determines the at least one piece of third operation mode information based on the cooperative sensing mode and determines the fourth operation mode information based on the cooperative sensing mode, refer to the specific implementations in which the first sensing network element determines the first operation mode information based on the cooperative sensing mode and determines the at least one piece of second operation mode information based on the cooperative sensing mode in S502. Details are not described herein again.

In a possible design manner, that the second sensing network element determines the at least one piece of third operation mode information and the fourth operation mode information based on the cooperative sensing mode may include: determining the at least one piece of third operation mode information and the fourth operation mode information based on the cooperative sensing mode and at least one of the first capability information and the first sensing resource information. For a specific implementation, refer to the specific implementation in which the first sensing network element determines the first operation mode information and the at least one piece of second operation mode information based on the cooperative sensing mode and at least one of the first capability information and the first sensing resource information in S502. Details are not described herein again.

For example, the second sensing network element may determine, based on the cooperative sensing mode and at least one of the sensing capability information and the sensing resource information of the at least one third sensing network element, at least one third sensing network element that needs to perform the cooperative sensing and an operation mode of each third sensing network element.

For example, the second sensing network element determines the third sensing network element based on a second sensing area in the first sensing control information. For example, a sensing area of the third sensing network element includes the second sensing area.

In some embodiments, the fourth request message may further include one or more of the following: data indication information, second sensing control information, address information, sensing time information, sensing bandwidth information, and second primary-secondary indication information.

For specific implementations of the data indication information, the sensing time information, and the sensing bandwidth information, refer to the corresponding implementations in S502. Details are not described herein again.

Optionally, the address information indicates an address for sending the sensing data or a destination address. For example, the address information indicates an address of the first sensing network element, an address of a server of the first sensing service, and an address of the second sensing network element. The address information may be an IP address, a tunnel endpoint identifier, a fully qualified domain name, or the like. The second sensing network element may obtain the address of the first sensing network element or the address of the server of the first sensing service by using the first request message. The second sensing network element may further allocate the address of the second sensing network element. The address is used to receive sensing data of the third sensing network element.

Optionally, the address information may be received by the second sensing network element from the first sensing network element, or determined by the second sensing network element.

Optionally, the data indication information, the sensing time information, and/or the sensing bandwidth information may be determined by the second sensing network element. In this case, the second sensing network element and the at least one third sensing network element may perform the cooperative sensing based on the sensing time information and/or the sensing bandwidth information.

In some embodiments, the second sensing network element may determine the first sensing control information and the second sensing control information based on the service type and/or the service requirement of the first sensing service. In this case, the second sensing network element may perform the sensing based on the first sensing control information, and the third sensing network element may perform the sensing based on the second sensing control information. For specific implementations of the first sensing control information and the second sensing control information, refer to the corresponding implementations in S502. Details are not described herein again.

Optionally, the second primary-secondary indication information may indicate that the third sensing network element is a secondary sensing network element. For example, when the second sensing network element is the primary sensing network element, the at least one third sensing network element is indicated that the third sensing network element is the secondary sensing network element.

S603: The second sensing network element performs the sensing based on the cooperative sensing mode.

Optionally, S603 may include: The second sensing network element performs the sensing based on the fourth operation mode information. For example, the second sensing network element may send the sensing signal and receive the echo signal, send the sensing signal and not receive the echo signal, or receive the echo signal and not send the sensing signal.

In a possible design manner, that the second sensing network element performs the sensing based on the fourth operation mode information may include: The second sensing network element performs the sensing based on the fourth operation mode information and one or more of the sensing time information, the sensing bandwidth information, and the first sensing control information.

For specific implementations of the data indication information, the address information, the sensing time information, and the sensing bandwidth information, refer to the corresponding implementations in S502. Details are not described herein again.

In a possible design manner, the communication method shown in FIG. 6 may further include: The second sensing network element sends the sensing data based on the data indication information and/or the address information.

For example, after receiving the echo signal to obtain the sensing data, the second sensing network element sends a time stamp or a sequence number together with the sensing data to the address indicated by the address indication information. For example, the second sensing network element may send the sensing data to the address of the first sensing network element, and the first sensing network element receives the sensing data and provides the sensing service. For another example, the second sensing network element sends the sensing data to the address of the server of the first sensing service.

S604: The third sensing network element performs the sensing based on the third sensing mode information.

It should be noted that a sequence of S606 and S605 is not limited in this embodiment of this application.

For example, if the third sensing mode information may include the third operation mode information, the third sensing network element may perform the sensing by using the operation mode indicated by the third operation mode information. For example, the third sensing network element may send the sensing signal and receive the echo signal, send the sensing signal and not receive the echo signal, or receive the echo signal and not send the sensing signal.

In some embodiments, S604 may include: The third sensing network element performs the sensing based on the third sensing mode information and one or more of the sensing time information, the sensing bandwidth information, and the first sensing control information.

In some embodiments, the communication method shown in FIG. 6 may further include: The third sensing network element sends the sensing data based on the data indication information and/or the address information. For a specific implementation, refer to the corresponding implementation in S505. Details are not described herein again.

Optionally, when the address information is the address of the second sensing network element, the second sensing network element may directly forward the sensing data received from the third sensing network element to the first sensing network element or the server of the first sensing service. Alternatively, the second sensing network element packs the sensing data of the third sensing network element and the sensing data of the second sensing network element based on time stamps or sequence numbers of the sensing data (where for example, packs sensing data having a same time stamp or sequence number or places the sensing data having a same time stamp or sequence number in a same container) or sends the sensing data in order (for example, sends the sensing data of the third sensing network element and the sensing data of the second sensing network element in order of the time stamps or the sequence numbers), and sends the sensing data to the first sensing network element or the server of the first sensing service.

Optionally, the communication method shown in FIG. 6 may further include: The first sensing network element receives the sensing data from the second sensing network element and/or receives the sensing data from the at least one third sensing network element, and provides the first sensing service for the first network element based on the received sensing data. For example, the first sensing network element may further perform fusion processing on the sensing data from the second sensing network element and the sensing data received from the at least one third sensing network element based on the time stamps or the sequence numbers of the sensing data. For example, the first sensing network element performs the fusion processing on the sensing data that has the same time stamp or sequence number.

Based on the communication method shown in FIG. 6, the second sensing network element determines that the first sensing service uses the cooperative sensing, and sends the fourth request message to the at least one third sensing network element, to request the third sensing network element to perform the sensing. The fourth request message includes the third sensing mode information indicating the cooperative sensing. The second sensing network element performs the sensing based on the cooperative sensing mode, and the third sensing network element performs the sensing based on the third sensing mode information. In this way, sensing can be performed in the cooperative sensing mode, to improving sensing accuracy.

In this application, unless otherwise specified, for identical or similar parts in embodiments, refer to each other. In embodiments of this application and implementations/implementation methods/implementation methods in embodiments, unless otherwise specified or there is a logic conflict, terms and/or descriptions between different embodiments and the implementations/implementation methods/implementation methods in embodiments are consistent and may be mutually referenced, and technical features in different embodiments and the implementations/implementation methods/implementation methods in embodiments may be combined based on an internal logical relationship thereof, to form a new embodiment, implementation, implementation method, or implementation method. The following implementations of this application are not intended to limit the protection scope of this application.

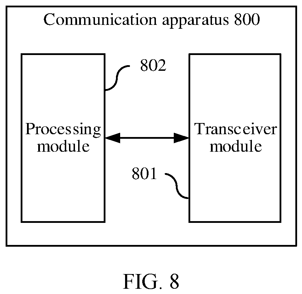

The communication method provided in embodiments of this application is described in detail above with reference to FIG. 4 to FIG. 6. A communication apparatus provided in embodiments of this application is described in detail below with reference to FIG. 7 and FIG. 8.

FIG. 7 is a schematic diagram of a structure of a communication apparatus that may be configured to perform a communication method according to an embodiment of this application. The communication apparatus 700 may be a first sensing network element, a second sensing network element, or a third sensing network element, or may be a chip applied to the first sensing network element, the second sensing network element, or the third sensing network element or another part that has a corresponding function. As shown in FIG. 7, the communication apparatus 700 may include a processor 701. Optionally, the communication apparatus 700 may further include one or more of a memory 702 and a transceiver 703. The processor 701 may be coupled to one or more of the memory 702 and the transceiver 703, for example, may be connected through a communication bus. Alternatively, the processor 701 may be independently used.

The following describes the parts of the communication apparatus 700 in detail with reference to FIG. 7.

The processor 701 is a control center of the communication apparatus 700, and may be a processor or may be a general term of a plurality of processing elements. For example, the processor 701 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 701 may perform various functions of the communication apparatus 700 by running or executing a software program stored in the memory 702 and invoking data stored in the memory 702.

During specific implementation, in an embodiment, the processor 701 may include one or more CPUs, for example, a CPU 0 and a CPU 1 in FIG. 7.

During specific implementation, in an embodiment, the communication apparatus 700 may alternatively include a plurality of processors, for example, the processor 701 and a processor 704 that are shown in FIG. 7. Each of the processors may be a single-core processor (single-CPU) or may be a multi-core processor (multi-CPU). The processor herein may refer to one or more communication devices, circuits, and/or processing cores configured to process data (for example, computer program instructions).

Optionally, the memory 702 may be a read-only memory (read-only memory, ROM) or another type of static storage communication device that can store static information and instructions, a random access memory (random access memory, RAM) or another type of dynamic storage communication device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, any other medium that can be used to carry or store expected program code in a form of an instruction or a data structure and that can be accessed by a computer. The memory 702 is not limited thereto. The memory 702 may be integrated with the processor 701, or may exist independently, and is coupled to the processor 701 through an input/output port (not shown in FIG. 7) of the communication apparatus 700. This is not specifically limited in this embodiment of this application.

For example, the input port may be configured to implement a receiving function performed by the first sensing network element, the second sensing network element, or the third sensing network element in any one of the foregoing method embodiments, and the output port may be configured to implement a sending function performed by the first sensing network element, the second sensing network element, or the third sensing network element in any one of the foregoing method embodiments.

The memory 702 may be configured to store a software program for executing the solutions of this application, and the processor 701 controls execution of the software program. For a specific implementation, refer to the following method embodiments. Details are not described herein again.

Optionally, the transceiver 703 is configured to communicate with another communication apparatus. For example, when the communication apparatus 700 is the first sensing network element, the transceiver 703 may be configured to communicate with the second sensing network element, the third sensing network element, and a first network element. For another example, when the communication apparatus 700 is the second sensing network element, the transceiver 703 may be configured to communicate with the first sensing network element and the third sensing network element. For still another example, when the communication apparatus 700 is the third sensing network element, the transceiver 703 may be configured to communicate with the first sensing network element and the second sensing network element.

In addition, the transceiver 703 may include a receiver and a transmitter (which are not separately shown in FIG. 7). The receiver is configured to implement the receiving function, and the transmitter is configured to implement the sending function. The transceiver 703 may be integrated with the processor 701, or may exist independently, and is coupled to the processor 701 through an input/output port (not shown in FIG. 7) of the communication apparatus 700. This is not specifically limited in this embodiment of this application.

It should be noted that the structure of the communication apparatus 700 shown in FIG. 7 does not constitute a limitation on the communication apparatus. An actual communication apparatus may include more or fewer parts than those shown in the figure, or combine some parts, or have different part arrangements.

The processor 701 in the communication apparatus 700 shown in FIG. 7 invokes application program code stored in the memory 702, to indicate the first sensing network element to perform actions of the first sensing network element in FIG. 4 to FIG. 6.

The processor 701 in the communication apparatus 700 shown in FIG. 7 invokes the application program code stored in the memory 702, to indicate the second sensing network element to perform actions of the second sensing network element in FIG. 4 to FIG. 6. This is not limited in this embodiment.

The processor 701 in the communication apparatus 700 shown in FIG. 7 invokes the application program code stored in the memory 702, to indicate the third sensing network element to perform actions of the third sensing network element in FIG. 4 to FIG. 6. This is not limited in this embodiment.

When the communication apparatus is the first sensing network element, the communication apparatus 700 may perform any one or more possible design manners related to the first sensing network element in the foregoing method embodiments. When the communication apparatus is the second sensing network element, the communication apparatus 700 may perform any one or more possible design manners related to the second sensing network element in the foregoing method embodiments. When the communication apparatus is the third sensing network element, the communication apparatus 700 may perform any one or more possible design manners related to the third sensing network element in the foregoing method embodiments.

It should be noted that all related content of steps in the foregoing method embodiments may be cited in function descriptions of corresponding functional modules. Details are not described herein.

FIG. 8 is a schematic diagram of a structure of another communication apparatus according to an embodiment of this application. For ease of description, FIG. 8 shows only main parts of the communication apparatus.

The communication apparatus 800 includes a transceiver module 801 and a processing module 802. The communication apparatus 800 may be the first sensing network element, the second sensing network element, or the third sensing network element in the foregoing method embodiments. The transceiver module 801 may also be referred to as a transceiver unit, and is configured to implement a sending/receiving function performed by the first sensing network element, the second sensing network element, or the third sensing network element in any one of the foregoing method embodiments.

It should be noted that the transceiver module 801 may include a receiving module and a sending module (not shown in FIG. 8). The receiving module is configured to receive data and/or signaling from another device. The sending module is configured to send data and/or signaling to another device. A specific implementation of the transceiver module is not specifically limited in this application. The transceiver module may include a transceiver circuit, a transceiver machine, a transceiver, or a communication interface.

The processing module 802 may be configured to implement a processing function performed by the first sensing network element, the second sensing network element, or the third sensing network element in any one of the foregoing method embodiments. The processing module 802 may be a processor.

In this embodiment, the communication apparatus 800 may be presented in a form of functional modules obtained through integration. The "module" herein may be a specific ASIC, a circuit, a processor and a memory that execute one or more software or firmware programs, an integrated logic circuit, and/or another device that can provide the foregoing function. In a simple embodiment, a person skilled in the art may figure out that the communication apparatus 800 may be in a form of the communication apparatus 700 shown in FIG. 7.

For example, the processor 701 in the communication apparatus 700 shown in FIG. 7 may invoke computer-executable instructions stored in the memory 702, so that the communication method in the foregoing method embodiments is executed.

Specifically, functions/implementation processes of the transceiver module 801 and the processing module 802 in FIG. 8 may be implemented by the processor 701 in the communication apparatus 700 shown in FIG. 7 by invoking the computer-executable instructions stored in the memory 702. Alternatively, a function/implementation process of the processing module 802 in FIG. 8 may be implemented by the processor 701 in the communication apparatus 700 shown in FIG. 7 by invoking the computer-executable instructions stored in the memory 702, and a function/implementation process of the transceiver module 801 in FIG. 8 may be implemented by using the transceiver 703 in the communication apparatus 700 shown in FIG. 7.

The communication apparatus 800 provided in this embodiment can perform the foregoing communication method. Therefore, for technical effects that can be achieved by the communication apparatus 800, refer to the foregoing method embodiments. Details are not described herein again.

In a possible design solution, the communication apparatus 800 shown in FIG. 8 may be applied to the communication system shown in FIG. 1, and perform a function of the first sensing network element in the communication method shown in FIG. 5 or FIG. 6.

The processing module 802 is configured to determine that a first sensing service uses cooperative sensing.

The transceiver module 801 is configured to send a first request message to a second sensing network element. The first request message is used to request the second sensing network element to perform sensing, the first request message includes first sensing mode information, and the first sensing mode information indicates the cooperative sensing.

Optionally, the communication apparatus 800 may further include a storage module (not shown in FIG. 8). The storage module stores a program or instructions. When the processing module 802 executes the program or the instructions, the communication apparatus 800 is enabled to perform a function of the first sensing network element in the communication method shown in FIG. 5 or FIG. 6.

It should be noted that the communication apparatus 800 may be the first sensing network element, or may be a chip (system) or another part or component that may be disposed in the first sensing network element. This is not limited in this application.

In addition, for a technical effect of the communication apparatus 800, refer to the technical effect of the communication method shown in FIG. 5 or FIG. 6. Details are not described herein again.

In another possible design solution, the communication apparatus 800 shown in FIG. 8 may be applied to the communication system shown in FIG. 1, and perform a function of the second sensing network element in the communication method shown in FIG. 5.

The transceiver module 801 is configured to receive a first request message from a first sensing network element. The first request message is used to request the communication apparatus 800 to perform sensing, the first request message includes first sensing mode information, and the first sensing mode information indicates cooperative sensing.

The processing module 802 is configured to perform the sensing based on first sensing mode information.

It should be noted that all related content of steps in the foregoing method embodiments may be cited in function descriptions of corresponding functional modules. Details are not described herein.

Optionally, the communication apparatus 800 may further include a storage module (not shown in FIG. 8). The storage module stores a program or instructions. When the processing module 802 executes the program or the instructions, the communication apparatus 800 is enabled to perform a function of the second sensing network element in the communication method shown in FIG. 5.

It should be noted that the communication apparatus 800 may be the second sensing network element, or may be a chip (system) or another part or component that may be disposed in the second sensing network element. This is not limited in this application.

In addition, for a technical effect of the communication apparatus 800, refer to the technical effect of the communication method shown in FIG. 5. Details are not described herein again.

In still another possible design solution, the communication apparatus 800 shown in FIG. 8 may be applied to the communication system shown in FIG. 1, and perform a function of the third sensing network element in the communication method shown in FIG. 5.

The transceiver module 801 is configured to receive a second request message from a first sensing network element. The second request message is used to request at least one communication apparatus 800 to perform sensing, the second request message includes second sensing mode information, and the second sensing mode information indicates cooperative sensing.

The processing module 802 is configured to perform the sensing based on the second sensing mode information.

It should be noted that all related content of steps in the foregoing method embodiments may be cited in function descriptions of corresponding functional modules. Details are not described herein.

Optionally, the communication apparatus 800 may further include a storage module (not shown in FIG. 8). The storage module stores a program or instructions. When the processing module 802 executes the program or the instructions, the communication apparatus 800 is enabled to perform a function of the third sensing network element in the communication method shown in FIG. 5.

It should be noted that the communication apparatus 800 may be the third sensing network element, or may be a chip (system) or another part or component that may be disposed in the third sensing network element. This is not limited in this application.

In addition, for a technical effect of the communication apparatus 800, refer to the technical effect of the communication method shown in FIG. 5. Details are not described herein again.

In yet another possible design solution, the communication apparatus 800 shown in FIG. 8 may be applied to the communication system shown in FIG. 1, and perform a function of the second sensing network element in the communication method shown in FIG. 6.

The processing module 802 is configured to determine that a first sensing service uses cooperative sensing.

The transceiver module 801 is configured to send a fourth request message to at least one third sensing network element. The fourth request message is used to request the third sensing network element to perform sensing, the fourth request message includes third sensing mode information, and the third sensing mode information indicates the cooperative sensing.

The processing module 802 is further configured to perform sensing based on a mode of the cooperative sensing.

It should be noted that all related content of steps in the foregoing method embodiments may be cited in function descriptions of corresponding functional modules. Details are not described herein.

Optionally, the communication apparatus 800 may further include a storage module (not shown in FIG. 8). The storage module stores a program or instructions. When the processing module 802 executes the program or the instructions, the communication apparatus 800 is enabled to perform a function of the second sensing network element in the communication method shown in FIG. 6.

It should be noted that the communication apparatus 800 may be the second sensing network element, or may be a chip (system) or another part or component that may be disposed in the second sensing network element. This is not limited in this application.

In addition, for a technical effect of the communication apparatus 800, refer to the technical effect of the communication method shown in FIG. 6. Details are not described herein again.

In still yet another possible design solution, the communication apparatus 800 shown in FIG. 8 may be applied to the communication system shown in FIG. 1, and perform a function of the third sensing network element in the communication method shown in FIG. 6.

The transceiver module 801 is configured to receive a fourth request message from a second sensing network element. The fourth request message is used to request the third sensing network element to perform sensing, the fourth request message includes third sensing mode information, and the third sensing mode information indicates cooperative sensing.

The processing module 802 is configured to perform the sensing based on third sensing mode information.

It should be noted that all related content of steps in the foregoing method embodiments may be cited in function descriptions of corresponding functional modules. Details are not described herein.

Optionally, the communication apparatus 800 may further include a storage module (not shown in FIG. 8). The storage module stores a program or instructions. When the processing module 802 executes the program or the instructions, the communication apparatus 800 is enabled to perform a function of the third sensing network element in the communication method shown in FIG. 6.

It should be noted that the communication apparatus 800 may be the third sensing network element, or may be a chip (system) or another part or component that may be disposed in the third sensing network element. This is not limited in this application.

In addition, for a technical effect of the communication apparatus 800, refer to the technical effect of the communication method shown in FIG. 6. Details are not described herein again.

It should be noted that all related content of steps in the foregoing method embodiments may be cited in function descriptions of corresponding functional modules. Details are not described herein.

An embodiment of this application provides a communication system. The communication system includes a second sensing network element and at least one third sensing network element. Optionally, the communication system may further include a first sensing network element. Optionally, the communication system may further include a first network element.

The first sensing network element is configured to perform actions of the first sensing network element in the foregoing method embodiments. For a specific execution method and process, refer to the foregoing method embodiments. Details are not described herein again.

The second sensing network element is configured to perform actions of the second sensing network element in the foregoing method embodiments. For a specific execution method and process, refer to the foregoing method embodiments. Details are not described herein again.

The third sensing network element is configured to perform actions of the third sensing network element in the foregoing method embodiments. For a specific execution method and process, refer to the foregoing method embodiments. Details are not described herein again.

The first network element is configured to perform actions of the first network element in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to a sending/receiving function related to the communication method provided in embodiments of this application.

For example, the input port may be configured to implement a receiving function related to the communication method provided in embodiments of this application, and the output port may be configured to implement a sending function related to the communication method provided in embodiments of this application.

For example, a processor in the communication apparatus 700 may be configured to perform, for example, but not limited to, baseband related processing, and a transceiver in the communication apparatus 700 may be configured to perform, for example, but not limited to, radio frequency transmission and reception. The foregoing components may be separately disposed on chips that are independent of each other, or may be at least partially or completely disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of types of application processors (for example, but not limited to, a graphics processor and a multimedia processor) may be integrated on a same chip. The chip may be referred to as a system on a chip (system on chip). Whether the components are separately disposed on different chips or integrated and disposed on one or more chips often depends on a specific demand of a product design. A specific implementation form of the foregoing component is not limited in embodiments of the present invention.

In a possible design, the chip system further includes a memory. The memory is configured to store program instructions and data for implementing functions of the communication method provided in embodiments of this application.

The chip system may include a chip, or may include the chip and another discrete component.

An embodiment of this application provides a computer-readable storage medium. The computer-readable storage medium includes a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or a part of the foregoing embodiments may be implemented by using software, hardware (for example, a circuit), firmware, or any combination thereof. When software is used to implement embodiments, all or a part of the foregoing embodiments may be implemented in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from the computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one (item) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to an existing technology, or all or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining that a first sensing service uses cooperative sensing; and
sending a first request message to a second sensing network element, wherein the first request message is used to request the second sensing network element to perform sensing, the first request message comprises first sensing mode information, and the first sensing mode information indicates the cooperative sensing.

2. The communication method according to claim 1, wherein the method further comprises:
sending a second request message to a third sensing network element, wherein the second request message is used to request the third sensing network element to perform sensing, the second request message comprises second sensing mode information, and the second sensing mode information indicates the cooperative sensing.

3. The communication method according to claim 1 or 2, wherein the first sensing mode information comprises first operation mode information, and the first operation mode information indicates an operation mode of the second sensing network element.

4. The communication method according to claim 3, wherein the second sensing mode information comprises second operation mode information, the second operation mode information indicates an operation mode of the third sensing network element, and the operation mode of the second sensing network element and the operation mode of the third sensing network element are used to implement the cooperative sensing.

5. The communication method according to claim 3 or 4, wherein the method further comprises:
determining the first operation mode information and the second operation mode information based on a mode of the cooperative sensing.

6. The communication method according to claim 5, wherein the determining the first operation mode information and the second operation mode information based on a mode of the cooperative sensing comprises:
determining the first operation mode information and the second operation mode information based on the cooperative sensing mode and at least one of first capability information and first sensing resource information, wherein the first capability information comprises sensing capability information of the second sensing network element and sensing capability information of the third sensing network element, the first sensing resource information comprises sensing resource information of the second sensing network element and sensing resource information of the third sensing network element, and the sensing resource information indicates a resource for sending a sensing signal.

7. The communication method according to any one of claims 3 to 6, wherein the first operation mode information comprises sending a sensing signal and receiving an echo signal, sending the sensing signal and not receiving the echo signal, or receiving the echo signal and not sending the sensing signal.

8. The communication method according to any one of claims 4 to 6, wherein the second operation mode information comprises sending a sensing signal and receiving an echo signal, sending the sensing signal and not receiving the echo signal, or receiving the echo signal and not sending the sensing signal.

9. The communication method according to claim 1, wherein the sending a first request message to a second sensing network element comprises:
sending the first request message to the second sensing network element based on sensing capability information of the second sensing network element.

10. The communication method according to any one of claims 1 to 9, wherein the determining that a first sensing service uses cooperative sensing comprises:
determining, based on one or more of sensing service information, first indication information, sensing result information, the first capability information, and the first sensing resource information, that the first sensing service uses the cooperative sensing, wherein the sensing service information comprises a service type of the first sensing service and/or a service requirement of the first sensing service, the first indication information indicates a sensing mode expected by a first network element, the sensing result information comprises whether sensing data obtained in a single-station sensing mode meets the service requirement, the first capability information comprises the sensing capability information of the second sensing network element and the sensing capability information of the third sensing network element, the first sensing resource information comprises the sensing resource information of the second sensing network element and the sensing resource information of the third sensing network element, and the sensing resource information indicates the resource for sending the sensing signal.

11. The communication method according to claim 10, wherein the sensing service information further comprises one or more of the following: a correspondence between the service type of the first sensing service and the cooperative sensing, and a correspondence between the service requirement of the first sensing service and the cooperative sensing.

12. The communication method according to any one of claims 1 to 11, wherein the first request message further comprises data indication information and/or address information, the data indication information indicates that sensing data carries a time stamp or a sequence number, and the address information indicates an address for sending the sensing data.

13. The communication method according to any one of claims 1 to 12, wherein the first request message further comprises identification information of the third sensing network element and/or first primary-secondary indication information, and the first primary-secondary indication information indicates that the second sensing network element is a primary sensing network element or a secondary sensing network element.

14. The communication method according to any one of claims 1 to 13, wherein the first request message further comprises sensing time information and/or sensing bandwidth information, the sensing time information comprises one or more of the following: sensing duration, a sensing periodicity, and start and end sensing time points, and the sensing bandwidth information is used to determine bandwidth for sending or receiving the sensing signal.

15. The communication method according to any one of claims 2 to 14, wherein the second request message further comprises data indication information and/or address information, the data indication information indicates that sensing data carries a time stamp or a sequence number, and the address information indicates an address for sending the sensing data.

16. The communication method according to any one of claims 2 to 15, wherein the second request message further comprises identification information of the second sensing network element and/or second primary-secondary indication information, and the second primary-secondary indication information indicates that the third sensing network element is a primary sensing network element or a secondary sensing network element.

17. The communication method according to any one of claims 2 to 16, wherein the second request message further comprises sensing time information and/or sensing bandwidth information, the sensing time information comprises one or more of the following: sensing duration, a sensing periodicity, and start and end sensing time points, and the sensing bandwidth information is used to determine bandwidth for sending or receiving the sensing signal.

18. The communication method according to any one of claims 10 to 17, wherein the method further comprises:
receiving a third request message from the first network element, wherein the third request message is used to request the first sensing service, and the third request message comprises the sensing service information and/or the first indication information.

19. The communication method according to any one of claims 1 to 18, wherein the method further comprises:
receiving the sensing capability information and/or the sensing resource information from the second sensing network element.

20. The communication method according to any one of claims 1 to 19, wherein the method further comprises:
receiving the sensing capability information and/or the sensing resource information from the third sensing network element.

21. The communication method according to any one of claims 1 to 20, wherein the cooperative sensing mode comprises a single base station acting as a transmitter and a receiver, different base stations acting as a transmitter and a receiver, one base station acting as a transmitter and multiple base stations acting as receivers, or multiple base stations acting as transmitters and one base station acting as a receiver.

22. A communication method, comprising:
determining that a first sensing service uses cooperative sensing;
sending a fourth request message to a third sensing network element, wherein the fourth request message is used to request the third sensing network element to perform sensing, the fourth request message comprises third sensing mode information, and the third sensing mode information indicates the cooperative sensing; and
performing sensing based on a mode of the cooperative sensing.

23. The communication method according to claim 22, wherein the third sensing mode information comprises third operation mode information, and the third operation mode information indicates an operation mode of the third sensing network element.

24. The communication method according to claim 23, wherein the method further comprises:
determining the third operation mode information based on the cooperative sensing mode.

25. The communication method according to claim 24, wherein the method further comprises:
determining fourth operation mode information based on the cooperative sensing mode, wherein the fourth operation mode information indicates an operation mode of a second sensing network element, and the operation mode of the second sensing network element and the operation mode of the third sensing network element are used to implement the cooperative sensing.

26. The communication method according to claim 25, wherein the determining the third operation mode information and the fourth operation mode information based on the cooperative sensing mode comprises:
determining the third operation mode information and the fourth operation mode information based on the cooperative sensing mode and at least one of first capability information and first sensing resource information, wherein the first capability information comprises sensing capability information of the second sensing network element and sensing capability information of the third sensing network element, the first sensing resource information comprises sensing resource information of the second sensing network element and sensing resource information of the third sensing network element, and the sensing resource information indicates a resource for sending a sensing signal.

27. The communication method according to any one of claims 23 to 26, wherein the third operation mode information comprises sending a sensing signal and receiving an echo signal, sending the sensing signal and not receiving the echo signal, or receiving the echo signal and not sending the sensing signal.

28. The communication method according to any one of claims 24 to 26, wherein the fourth operation mode information comprises sending a sensing signal and receiving an echo signal, sending the sensing signal and not receiving the echo signal, or receiving the echo signal and not sending the sensing signal.

29. The communication method according to any one of claims 22 to 28, wherein the determining that a first sensing service uses cooperative sensing comprises:
receiving a first request message from a first sensing network element, wherein the first request message comprises first sensing mode information, and the first sensing mode information indicates the cooperative sensing.

30. The communication method according to any one of claims 22 to 28, wherein the determining that a first sensing service uses cooperative sensing comprises:
determining, based on one or more of sensing service information, the first capability information, and the first sensing resource information, that the first sensing service uses the cooperative sensing, wherein the sensing service information comprises a service type of the first sensing service and/or a service requirement of the first sensing service, the first capability information comprises the sensing capability information of the second sensing network element and the sensing capability information of the third sensing network element, the first sensing resource information comprises the sensing resource information of the second sensing network element and the sensing resource information of the third sensing network element, and the sensing resource information indicates the resource for sending the sensing signal.

31. The communication method according to claim 30, wherein the sensing service information further comprises one or more of the following: a correspondence between the service type of the first sensing service and the cooperative sensing, and a correspondence between the service requirement of the first sensing service and the cooperative sensing.

32. The communication method according to any one of claims 22 to 31, wherein the fourth request message further comprises data indication information and/or address information, the data indication information indicates that sensing data carries a time stamp or a sequence number, and the address information indicates an address for sending the sensing data.

33. The communication method according to any one of claims 22 to 32, wherein the fourth request message further comprises sensing time information and/or sensing bandwidth information, the sensing time information comprises one or more of the following: sensing duration, a sensing periodicity, and start and end sensing time points, and the sensing bandwidth information is used to determine bandwidth for sending or receiving the sensing signal.

34. The communication method according to claim 26 or 30, wherein the method further comprises:
receiving the sensing capability information and/or the sensing resource information from the third sensing network element, wherein the sensing resource information indicates the resource for sending the sensing signal.

35. The communication method according to any one of claims 22 to 34, wherein the cooperative sensing mode comprises a single base station acting as a transmitter and a receiver, different base stations acting as a transmitter and a receiver, one base station acting as a transmitter and multiple base stations acting as receivers, or multiple base stations acting as transmitters and one base station acting as a receiver.

36. A communication apparatus, wherein the communication apparatus comprises a unit or module configured to perform the method according to any one of claims 1 to 21.

37. A communication apparatus, wherein the communication apparatus comprises a unit or module configured to perform the method according to any one of claims 22 to 35.

38. A communication apparatus, wherein the communication apparatus comprises a processor, and the processor is coupled to a memory;
the memory is configured to store a computer program; and
the processor is configured to execute the computer program stored in the memory, so that the communication method according to any one of claims 1 to 35 is performed.

39. A computer-readable storage medium, wherein the computer-readable storage medium comprises a computer program or instructions, and when the computer program or the instructions are run on a computer, the communication method according to any one of claims 1 to 35 is performed.

40. A computer program product, wherein the computer program product comprises a computer program or instructions, and when the computer program or the instructions are run on a computer, the communication method according to any one of claims 1 to 35 is performed.
